# EUROPEAN PATENT SPECIFICATION

(11) **EP 3 882 582 B1**
(45) Date of publication and mention of the grant of the patent: **04.01.2023**
(21) Application number: 21162820.1
(22) Date of filing: 16.03.2021
(51) Int. Cl.: G01G 11/00, G01G 23/37

(54) **WEIGHING APPARATUS**
WÄGEEINRICHTUNG
APPAREIL DE PESÉE

(30) Priority: 19.03.2020 JP 2020050013; 19.03.2020 JP 2020050015; 23.03.2020 JP 2020051128
(43) Date of publication of application: 22.09.2021
(73) Proprietor: Ishida Co., Ltd., Kyoto 606-8392 (JP)
(72) Inventor: TARUMOTO, Yoshinori, Ritto-shi, Shiga 520-3026 (JP); YAMAKAWA, Atsushi, Ritto-shi, Shiga 520-3026 (JP)
(74) Representative: Global IP Europe Patentanwaltskanzlei

(56) References cited:
- JP-A- H0 643 011
- JP-A- 2002 107 206

## Description

### TECHNICAL FIELD

The present disclosure relates to a weighing apparatus.

### BACKGROUND

As an example of a weighing apparatus, an apparatus for weighing an article (am object to be weighed) that is conveyed by a transport conveyor can be given. The WO2015-141670 A discloses a weighing apparatus including: a weighing unit that outputs an original signal corresponding to the weight of a weighed article; a filter unit that performs filtering processing on the original signal output from the weighing unit; and a control unit that causes a display unit to display a waveform of a weighing signal after the filtering processing.

JP H06-043011 A discloses a weighing apparatus which selects a set of digital filters based on the weighing results obtained by conveying a reference article on a weighing conveyor.

### SUMMARY

In the weighing apparatus as described above, there is a case where a plurality of digital filters are set in advance in the filter unit. In this way, the weight of the article can be accurately measured by setting a digital filter suitable for the situations of the weighing apparatus and the surroundings thereof. However, the setting of the digital filter is difficult for a mere user of a weighing apparatus. For this reason, the digital filter is usually set by a designer or an expert of the weighing apparatus, or only a digital filter set as a standard to the weighing apparatus is used without performing the setting of a digital filter suitable for a situation. In the former case, there is a problem in that the work efficiency of the weighing apparatus is lowered. In the latter case, there is a case where the weighing performance of the weighing apparatus is not sufficiently exhibited.

An object of an aspect of the present disclosure is to provide a weighing apparatus capable of sufficiently exhibiting weighing performance while improving work efficiency.

A weighing apparatus according to claim 1 of the present invention includes: a conveyance unit configured to convey an article; a weighing unit configured to weigh the article on the conveyance unit; and a processing unit including a plurality of digital filters set in advance and configured to process an original signal output from the weighing unit. The processing unit is configured to select one digital filter among the plurality of digital filters, based on a result of applying each of the plurality of digital filters to the original signal, when the conveyance unit is in operation and the article is not conveyed by the conveyance unit.

According to the weighing apparatus, the processing unit selects one digital filter among the plurality of digital filters, based on the result of applying each of the plurality of digital filters to the original signal that is obtained when the conveyance unit is in operation and the article is not conveyed by the conveyance unit (during so-called idle operation). In this way, a digital filter suitable for the situations of the weighing apparatus and the surrounding thereof (for example, vibration of the weighing apparatus itself, vibration that is transmitted from the outside to the weighing apparatus, and the like) can be automatically selected. Therefore, the weighing apparatus can accurately weigh the article even if the designer or the like of the weighing apparatus does not work. Therefore, the weighing apparatus can sufficiently exhibit the weighing performance while improving the work efficiency.

The processing unit may be configured to compare standard deviations of amplitudes for each waveform that is obtained by applying each of the plurality of digital filters to the original signal, and to select a digital filter in which a smallest standard deviation is obtained. In this case, it becomes easy to automatically select a digital filter suitable for the situations of the weighing apparatus and the surrounding thereof.

The processing unit may be configured to compare standard deviations of differential values of amplitudes for each waveform that is obtained by applying each of the plurality of digital filters to the original signal, and to select a digital filter in which a smallest standard deviation is obtained. In this case, since the influence of vibration that occurs when the article is conveyed to the weighing apparatus can be reduced, it becomes easy to automatically select a digital filter suitable for the situations of the weighing apparatus and the surrounding thereof.

The weighing unit may include a first weighing unit disposed on an upstream side of the conveyance unit and configured to output a first original signal, and a second weighing unit that is disposed on a downstream side of the conveyance unit and outputs a second original signal, and the processing unit may be configured to select one digital filter among the plurality of digital filters with respect to each of the first original signal and the second original signal. In this case, for example, even when a long article is conveyed to the weighing apparatus, or the like, it becomes easy to sufficiently exhibit the weighing performance of the weighing apparatus.

The processing unit may include a storage unit configured to store a date and time at which the one digital filter among the plurality of digital filters was selected, the one digital filter, and the original signal. In this case, the history of a weighing situation by the weighing apparatus can be easily confirmed.

For example, the situation of the weighing apparatus may change in response to a change or the like in the conveyance speed of the article. Therefore, in a case where the digital filter is set by the designer or the skilled person of the weighing apparatus, a burden on the designer or the skilled person is large, and there is a case where the work efficiency of the weighing apparatus is lowered. With respect to such a decrease in work efficiency, when the conveyance unit is in operation and the article is not conveyed by the conveyance unit, the processing unit may be configured to operate the conveyance unit at a plurality of conveyance speeds, and to select and store corresponding one digital filter among the plurality of digital filters with respect to each of the plurality of conveyance speeds. In this case, even when the conveyance speed of the article by the conveyance unit is changed during the weighing of the article by the weighing apparatus, a digital filter suitable for the changed conveyance speed can be automatically selected. Therefore, for example, even if the designer or the like of the weighing apparatus does not work every time the conveyance speed of the article by the conveyance unit is changed, the weight of the article can be accurately measured.

The weighing apparatus may further include a display unit configured to display the plurality of conveyance speeds and accuracy information for each of the plurality of conveyance speeds in association with each other. In this case, for example, when the operator tries to change the conveyance speed of the article by the conveyance unit, a difference in weighing accuracy of the article between the conveyance speeds before and after the change can be easily confirmed.

The processing unit may be configured to calculate the accuracy information, based on a standard deviation of an amplitude of a waveform obtained by performing filtering processing on the original signal. In this case, the accuracy information can be easily calculated.

The processing unit may be configured to calculate the accuracy information, based on a standard deviation of a differential value of an amplitude of a waveform obtained by performing filtering processing on the original signal. In this case, it is possible to calculate accuracy information in which the influence of vibration that occurs when the article is conveyed to the weighing apparatus is reduced.

The display unit may be configured to display a warning screen in a case where the standard deviation corresponding to a designated conveyance speed exceeds a predetermined threshold value. In this case, it becomes easy for the operator to sufficiently exhibit the weighing performance of the weighing apparatus even at the changed conveyance speed.

The display unit may be further configured to display a weighing pitch of the article calculated based on the conveyance speed, dimensions of the article along a conveying direction by the conveyance unit, and a conveyance frequency of the article. In this case, it becomes easy for the operator to change the conveyance speed of the article by the conveyance unit within an appropriate range.

When the conveyance unit is in operation and the article is not conveyed by the conveyance unit, the processing unit may be configured to operate the conveyance unit at a plurality of conveyance speeds, and to obtain accuracy information corresponding to each of the plurality of conveyance speeds. In this case, the operator or the like can easily confirm the weighing accuracy of the article for each conveyance speed. Therefore, when changing the conveyance speed of the conveyance unit, it becomes easy to eliminate a conveyance speed with a relatively low weighing accuracy. Accordingly, the determination of the conveyance speed can be expedited. In addition, the weighing accuracy of the article at the determined conveyance speed can be set to a high level.

For example, there is a case where a zero point is acquired after the weighing apparatus has been installed at an installation location and before the start of the inspection. After the zero point is acquired, the situations of the weighing apparatus and the surroundings thereof (for example, abnormality of the weighing unit, vibration of the weighing apparatus itself, vibration that is transmitted from the outside to the weighing apparatus, and the like) changes with time after the weighing apparatus is installed at the installation location, whereby there is a case where abnormality of the weighing unit, such as a shift by a certain level or more from the initially acquired zero point or expansion of variation, occurs. For example, in a case where the weighing apparatus is applied to the production line of the article, there is a case where such abnormality of the weighing unit affects the yield of the production of the article, or the like. With respect to such influence, the original signal may correspond to a weighing component of a force that is applied to the conveyance unit, and the processing unit may be configured to generate a weighing signal by applying a digital filter to the original signal, to perform weighing processing, based on the weighing signal, to generate first accuracy information for evaluating weighing accuracy, based on the weighing signal, in a case where the article is not located on the conveyance unit during the operation of the conveyance unit, and to detect abnormality of the weighing unit, based on the generated first accuracy information. In this case, the abnormality of the weighing unit is detected based on the generated first accuracy information. Here, the first accuracy information in a case where the article is not located on the conveyance unit during the operation of the conveyance unit is used as a reference, and a temporal change in the situations of the weighing apparatus and the surroundings thereof (for example, an increase in vibration of the floor) is regarded as a change in accuracy information with respect to the reference. In this way, the abnormality of the weighing unit can be detected earlier than in a case where the detection is not performed based on the above reference. As a result, it is possible to eliminate the abnormality of the weighing unit at an early stage and restart the weighing processing, and therefore, it becomes possible to reduce a decrease in productivity due to a temporal decrease in weighing accuracy.

The processing unit may be configured to generate second accuracy information for evaluating a temporal change in the weighing accuracy, after the generation of the first accuracy information, and to detect abnormality, based on a comparison result between the first accuracy information and the second accuracy information. In this case, evaluation of the second accuracy information is performed with the first accuracy information as a reference, whereby it is possible to easily evaluate a temporal change in weighing accuracy even if an operator is not an expert.

The processing unit may be configured to store a plurality of digital filters in advance, to apply a digital filter different from the digital filter applied to the generation of the first accuracy information to generate third accuracy information for evaluating the weighing accuracy at the different digital filter, in a case where the abnormality is detected, to select either the different digital filter or a predetermined default digital filter, based on a comparison result between the first accuracy information and the third accuracy information, and to perform the weighing processing. In this case, the digital filter is automatically switched based on the comparison result between the first accuracy information and the third accuracy information, whereby, even in a case where abnormality in weighing accuracy is detected when the digital filter applied to the generation of the first accuracy information is used, it becomes possible to restart the weighing processing by using the digital filter applied to the generation of the third accuracy information. As a result, it becomes possible to shorten an interruption time of the weighing processing.

The weighing apparatus may further include a notification unit that gives notice of occurrence of abnormality in a case where abnormality is detected. In this case, it is possible to cause the user of the weighing apparatus to recognize the occurrence of the abnormality of the weighing unit. As a result, the user of the weighing apparatus is urged to eliminate the abnormality of the weighing unit, and thus it becomes possible to early restart the weighing processing.

The weighing apparatus may further include a storage unit configured to store processing information that includes at least the date and time when the first accuracy information was generated, the type of the digital filter applied to the generation of the first accuracy information, or detection result information about the abnormality detection result, and a display unit may be configured to display the processing information. In this case, the user of the weighing apparatus can easily confirm the processing information.

### BRIEF DESCRIPTION OF THE DRAWINGS

FIG. 1 is a schematic configuration diagram of a weighing apparatus according to an embodiment.
FIG. 2 is a diagram showing a functional configuration of a control unit.
FIG. 3 is a flowchart for explaining a method of selecting a digital filter.
FIG. 4A is a diagram showing a waveform that is included in an original signal. FIG. 4B is a diagram showing a waveform after filtering processing is performed on the waveform shown in FIG. 4A.
FIG. 5A is an enlarged view showing a plurality of weighing results that are obtained by applying a default digital filter. FIG. 5B is an enlarged view showing a plurality of weighing results that are obtained by applying one digital filter different from the default digital filter.
FIG. 6 is a schematic configuration diagram of a weighing apparatus according to a first modification example.
FIG. 7 is a diagram showing an example of a screen that is displayed on a display interface.
FIG. 8 is a schematic configuration diagram of a weighing apparatus according to a third embodiment.
FIG. 9 is a flowchart showing first accuracy information generation processing of the weighing apparatus according to the third embodiment.
FIG. 10 is a flowchart showing abnormality detection processing of the weighing apparatus according to the third embodiment.
FIG. 11 is a flowchart showing digital filter switching processing of the weighing apparatus according to the third embodiment.
FIG. 12A is an example of a temporal change of a standard deviation in the abnormality detection processing, and FIG. 12B is an example of a temporal change of a standard deviation in weighing processing.
FIG. 13 is a schematic configuration diagram of a weighing apparatus according to a third modification example.

### DETAILED DESCRIPTION

Hereinafter, embodiments according to an aspect of the present disclosure will be described in detail with reference to the drawings. In each drawing, identical or corresponding parts are denoted by the same reference numerals, and overlapping description is omitted.

### (First Embodiment)

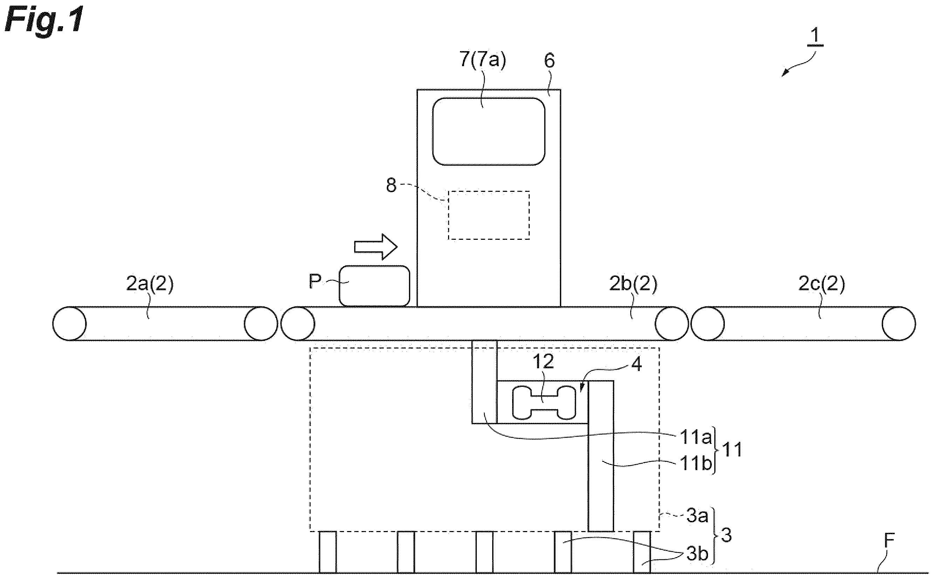

FIG. 1 is a diagram schematically showing a weighing apparatus according to a first embodiment. A weighing apparatus 1 shown in FIG. 1 is an apparatus for weighing an object to be measured while conveying it in the direction of an arrow in FIG. 1 (hereinafter, simply referred to as a "conveying direction"). The weighing apparatus 1 is, for example, an apparatus that is disposed on the final line of a production line. The object to be measured is, for example, an article P extending along the conveying direction. The weighing apparatus 1 includes a conveyance unit 2, a frame 3, a weighing unit 4, and an operation unit 6.

The conveyance unit 2 is a conveyance device capable of conveying the article P along the conveying direction, and is, for example, a conveyor. The conveyance unit 2 conveys the article P at a conveyance speed designated through, for example, the operation unit 6. The conveyance speed is designated through the operation unit 6. The conveyance unit 2 includes a first conveyor unit 2a, a second conveyor unit 2b, and a third conveyor unit 2c. Each of the first conveyor unit 2a, the second conveyor unit 2b, and the third conveyor unit 2c has, for example, a roller, a rotating body such as a motor, a conveyance belt, and the like. The first conveyor unit 2a, the second conveyor unit 2b, and the third conveyor unit 2c are disposed in order from the upstream side in the conveying direction. That is, the second conveyor unit 2b is located between the first conveyor unit 2a and the third conveyor unit 2c in the conveying direction. The first conveyor unit 2a is a conveyor that carries the article P into the second conveyor unit 2b. The first conveyor unit 2a may have, for example, a metal detector (not shown) or the like. The second conveyor unit 2b is a conveyor that carries the article P conveyed from the first conveyor unit 2a into the third conveyor unit 2c. The third conveyor unit 2c is a conveyor that carries out the article P from the second conveyor unit 2b. The third conveyor unit 2c has, for example, a sorter (not shown) that sorts out the articles P whose weight deviates from an appropriate range.

The weighing unit 4 is mounted on the second conveyor unit 2b. Therefore, the article P that is conveyed by the conveyance unit 2 is weighed on the second conveyor unit 2b. Further, a sensor for detecting the presence or absence of the article P may be provided on each of the upstream side and the downstream side of the second conveyor unit 2b. In this case, whether or not the entire article P is located on the second conveyor unit 2b can be easily determined.

The frame 3 is a member that accommodates the weighing unit 4, and is fixed to a floor F below the conveyance unit 2. The frame 3 has a main body 3a that accommodates the weighing unit 4, and a plurality of legs 3b that are located between the main body 3a and the floor F. In FIG. 1, the main body 3a is shown by a broken line.

The weighing unit 4 is a member for measuring the weight of the article P located on the second conveyor unit 2b, and is located at the central portion of the conveyance unit 2. The weighing unit 4 includes a strain body 11 that receives compression and tension according to a load, and a weighing cell 12 that weighs the article P located on the second conveyor unit 2b. The strain body 11 has a movable rigid body part 11a that supports the second conveyor unit 2b, and a fixed rigid body part 11b that is fixed to the frame 3. Each of the movable rigid body part 11a and the fixed rigid body part 11b is, for example, a member extending in the vertical direction. One end of the movable rigid body part 11a is connected to an upstream-side end portion of the second conveyor unit 2b, and the other end of the movable rigid body part 11a is connected to the weighing cell 12. One end of the fixed rigid body part 11b is connected to the weighing cell 12, and the other end of the fixed rigid body part 11b is connected to the main body 3a of the frame 3. Although not shown in the drawing, in the weighing cell 12, a plurality of strain gauges attached to the strain body 11 are connected to a Wheatstone bridge circuit.

In the first embodiment, the weighing unit 4 has an A/D conversion unit, in addition to the strain body 11 and the weighing cell 12. The weighing cell 12 extracts an electric signal according to a load that is transmitted from the strain body 11 from the Wheatstone bridge circuit. This electric signal is an analog original signal indicating the weighing result of the article P by the weighing cell 12, and is obtained when the article P is located on the second conveyor unit 2b. This analog original signal is converted into a digital original signal by the A/D conversion unit. The weighing unit 4 uses the digital original signal as an original signal and outputs it to the outside. In this way, the amount of data of the original signal that is transmitted from the weighing unit 4 to the operation unit 6 can be reduced.

The operation unit 6 is a member for operating the conveyance unit 2 and the weighing unit 4, and is provided to be erect in the vicinity of, for example, the second conveyor unit 2b. The operation unit 6 has a display interface 7 and a control unit 8.

The display interface 7 is a member (display unit) that displays an image based on display information that is output from the control unit 8. The display interface 7 displays, for example, a weighing signal that is obtained by performing filtering processing on the original signal, a weighing value indicating the weighing result of the weight of the article P, accuracy information for evaluating the accuracy of the weighing value, a conveyance speed of the conveyance unit 2, the dimensions of the article P along the conveying direction, a conveyance frequency of the article P, a weighing pitch of the article P, and the like. In the first embodiment, the display interface 7 has a touch panel 7a that functions as an external input unit. In this way, when the display interface 7 receives the input from an operator (a user), input information indicating the input content is output to the control unit 8. The input information is, for example, data regarding the conveyance speed of the conveyance unit 2, the dimensions of the article P along the conveying direction, the type of the article P, the conveyance frequency of the article P, and the like. The conveyance frequency of the article P is set, for example, based on the capacity of a production machine that is located upstream of the weighing apparatus 1.

Each of the weighing value of the article P and the accuracy information is data that is obtained based on the original signal (more specifically, the weighing signal) that is transmitted from the weighing unit 4 to the operation unit 6. The weighing value is calculated by a known method. Further, the weighing pitch of the article P is calculated by the control unit 8, based on the conveyance speed of the conveyance unit 2, the dimensions of the article P, and the conveyance frequency of the article P. The conveyance frequency of the article P is set, for example, based on the capacity of the production machine that is located upstream of the weighing apparatus 1.

The control unit 8 is a controller that controls each member included in the weighing apparatus 1, and is built in the operation unit 6. The control unit 8 is composed of a CPU (Central Processing Unit), a RAM (Random Access Memory), a ROM (Read Only Memory), and the like. The control unit 8 outputs, for example, an operation signal for controlling the conveyance speed (designated conveyance speed) of the conveyance unit 2 designated through the display interface 7 to the conveyance unit 2. Further, for example, in a case where the sorter is provided in the third conveyor unit 2c, when the control unit 8 determines that the weight of the article P deviates from an appropriate range set in advance, the control unit 8 outputs an operation signal to the sorter to sort out the article P (exclude it from the line). The control unit 8 is a processing unit that not only controls each member included in the weighing apparatus 1 but also executes reception/calculation/transmission of various signals, record/read of various signals, and the like. As an example of the calculation of various signals by the control unit 8, the derivation of the weighing result of the article P can be given. Therefore, the control unit 8 has, for example, a drive circuit for outputting a control signal of the conveyance unit 2, a drive circuit for calculating the weighing value of the article P from the original signal that is generated by the weighing unit 4, a drive circuit for calculating the accuracy information from the original signal, a storage circuit for storing each signal and each information, and the like.

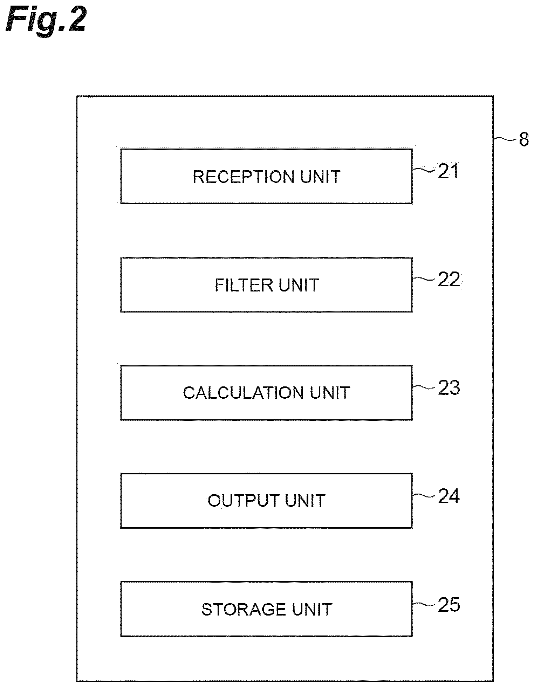

FIG. 2 is a diagram showing a functional configuration of the control unit. As shown in FIG. 2, the control unit 8 includes a reception unit 21, a filter unit 22, a calculation unit 23, an output unit 24, and a storage unit 25.

The reception unit 21 is, for example, a part that receives the original signal that is transmitted from the weighing unit 4 and the input information that is transmitted from the display interface 7. Each of the transmission of the original signal from the weighing unit 4 to the reception unit 21 and the transmission of the input information from the display interface 7 to the reception unit 21 may be performed by wire or wirelessly. The reception unit 21 may receive data other than the original signal and the input information.

The filter unit 22 is a part that performs the filtering processing on the original signal that is output from the weighing unit 4 by using a plurality of digital filters set in advance. Each of the plurality of digital filters is composed of a low-pass filter that attenuates a frequency component exceeding a frequency determined in advance, a notch filter (band stop filter) that attenuates noise at the frequency of the rotating body included in the conveyance unit 2, and the like. That is, in a case of selecting at least some of the plurality of digital filters, the filter unit 22 can perform multistep filtering processing on the original signal. Each digital filter may include one or more low-pass filters, and one or more notch filters. Each of the plurality of digital filters may include low-pass filters that attenuate frequency bands different from each other, or may include notch filters that attenuate frequency bands different from each other. The plurality of low-pass filters may be, for example, the variable filters described in Japanese Patent No. 5901126.

The filter unit 22 performs the filtering processing on the original signal by using one digital filter selected in advance from the plurality of digital filters during the operation of the conveyance unit 2 and during the conveyance of the article P. Then, the filter unit 22 outputs a signal (weighing signal) that is obtained by performing the filtering processing on the original signal. The obtained weighing signal is output to the calculation unit 23, the storage unit 25, and the like, which are included in the control unit 8 shown in FIG. 1, for example. The weighing signal has a waveform arranged to calculate the weight of the article P.

The filter unit 22 applies each of the plurality of digital filters to the original signal obtained when the conveyance unit 2 is in operation and the article P is not conveyed by the conveyance unit 2 (hereinafter, also referred to as "during the idle operation of the conveyance unit 2"). In other words, the filter unit 22 performs the filtering processing in which each of the plurality of digital filters is applied to the original signal, during the idle operation of the conveyance unit 2. In this way, the filter unit 22 generates a plurality of weighing signals that are the results of applying each of the plurality of digital filters to the original signal obtained during the idle operation of the conveyance unit 2. Then, the filter unit 22 outputs the plurality of weighing signals to the calculation unit 23, the storage unit 25, and the like. Whether or not the conveyance unit 2 is in idle operation may be determined by the operator or may be automatically determined. For example, when the conveyance unit 2 is in operation and a non-detection state of an article detection sensor provided in the weighing apparatus 1 continues for a predetermined time or longer, or the like, it may also be automatically determined that the conveyance unit 2 is in idle operation.

In the first embodiment, the information that is output from the weighing unit 4 when the conveyance unit 2 is idle-operated at a scheduled conveyance speed designated through the display interface 7 corresponds to the original signal that is obtained when the conveyance unit 2 is in operation and the article P is not conveyed by the conveyance unit 2. For example, in a case where the plurality of digital filters have a first filter to a third filter, the filtering processing is performed on the original signal by each of the first filter to the third filter. In this way, a first weighing signal that is obtained by applying the first filter, a second weighing signal that is obtained by applying the second filter, and a third weighing signal that is obtained by applying the third filter can be obtained.

The calculation unit 23 is a part that performs calculation processing on various input information. The calculation unit 23 performs calculation processing on the weight of the article P, based on the weighing signal that is output from the filter unit 22, during the operation of the conveyance unit 2 and during the conveyance of the article P. In this way, the calculation unit 23 generates the weighing value of the article P. The calculation unit 23 outputs the generated weighing value to the output unit 24. The calculation unit 23 calculates the weighing pitch (weighing interval) of the article P according to the set conveyance speed of the conveyance unit 2, the dimensions of the article P, and the conveyance frequency. The calculation unit 23 determines whether or not the weight of the article P deviates from an appropriate range set in advance, based on the weighing value. In response to this determination result, the calculation unit 23 outputs an operation signal to, for example, the sorter.

The calculation unit 23 selects one digital filter among the plurality of digital filters, based on the result of applying each of the plurality of digital filters to the original signal obtained when the conveyance unit 2 is in operation and the article P is not conveyed by the conveyance unit 2. In the first embodiment, the calculation unit 23 first generates a plurality of accuracy information based on a plurality of weighing signals obtained during the idle operation of the conveyance unit 2 at a set conveyance speed. Subsequently, the calculation unit 23 compares the plurality of accuracy information and determines the most appropriate accuracy information and/or weighing signal. Subsequently, the calculation unit 23 selects a digital filter corresponding to the determined accuracy information and/or weighing signal. Then, the calculation unit 23 outputs the determined accuracy information and/or weighing signal and information about the selected digital filter to the storage unit 25.

The accuracy information is calculated based on, for example, a standard deviation of an amplitude of a waveform that is included in the weighing signal. The calculation result may be the standard deviation itself of the amplitude of the waveform, or may be a parameter based on the standard deviation. In the first embodiment, the accuracy information is the standard deviation of the amplitude of the waveform that is included in the weighing signal. Therefore, the calculation unit 23 compares the standard deviations of the amplitudes for each waveform that is obtained by applying each of the plurality of digital filters to the original signal, and selects a digital filter in which the smallest standard deviation is obtained. For example, in a case where the plurality of digital filters have the first filter to the third filter, the calculation unit 23 calculates a first standard deviation of an amplitude of a waveform that is included in the first weighing signal, a second standard deviation of an amplitude of a waveform that is included in the second weighing signal, and a third standard deviation of an amplitude of a waveform that is included in the third weighing signal. Subsequently, the calculation unit 23 specifies a weighing signal in which the smallest value among the first standard deviation, the second standard deviation, and the third standard deviation is obtained. Then, the calculation unit 23 selects a digital filter applied at the specified weighing signal.

The waveform that is included in the weighing signal includes vibration that is generated by the weighing apparatus 1 and the surroundings thereof. The vibration serves as noise with respect to the weighing of the article P. Therefore, it can be determined that the smaller the standard deviation of the amplitude of the waveform, the smaller the noise with respect to the weighing of the article P. The vibration that is generated by the weighing apparatus 1 is vibration that is accompanied by the operation of the conveyance unit 2, vibration that occurs when the article P is conveyed to the conveyance unit 2, or the like. The vibration that is generated by the surroundings of the weighing apparatus 1 is, for example, vibration that is transmitted from the floor surface on which the weighing apparatus 1 is placed (floor vibration), or the like. The floor vibration is vibration caused by, for example, an apparatus installed in the production line of the article P that includes the weighing apparatus 1, an apparatus that is not included in the production line, or the like.

The output unit 24 outputs, for example, various information and various signals generated by the control unit 8 and various information and various signals stored in the storage unit 25 to the outside. The output unit 24 outputs, for example, the weighing signal, accuracy information, weighing pitch, and the like of the article P to the display interface 7 as display information. The output unit 24 outputs an operation signal for controlling the conveyance speed of the conveyance unit 2 to the conveyance unit 2, and outputs an operation signal for the sorter to the sorter. The output of the operation signal from the output unit 24 to the conveyance unit 2, or the like, may be performed by wire or wirelessly.

The storage unit 25 stores the input information that is input through the display interface 7, and various information and various signals that are generated by the control unit 8. The storage unit 25 stores the plurality of digital filters set in advance. The storage unit 25 stores the date and time when one digital filter among the plurality of digital filters was selected, based on the result of applying each of the plurality of digital filters to the original signal obtained during the idle operation of the conveyance unit 2. In addition, the storage unit 25 stores the one digital filter selected at the date and time, the original signal itself, and the weighing signal, weighing value, and accuracy information based on the original signal. In this way, the operator can easily confirm the weighing situation or the like of the weighing apparatus 1 when the one digital filter was selected.

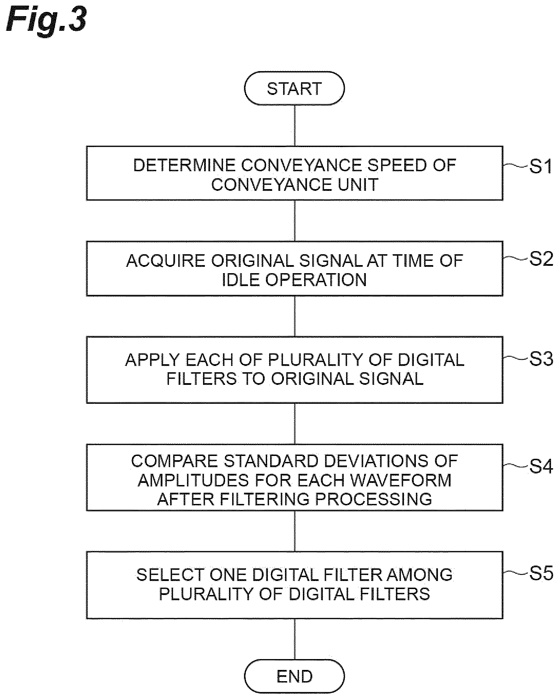

Next, a method of automatically selecting a digital filter by the weighing apparatus 1 according to the first embodiment will be described with reference to FIG. 3. FIG. 3 is a flowchart for explaining the method of selecting a digital filter. The selection method is performed, for example, when the weighing apparatus 1 has been installed at an installation location (for example, the production line or the like of the article P that includes the weighing apparatus 1), before the weighing of the article P (for example, before the start of weight inspection), or the like.

First, the conveyance speed of the conveyance unit 2 is determined (step S1). In step S1, the conveyance speed of the conveyance unit 2 is designated through the display interface 7. At this time, the operator may input the conveyance speed itself of the conveyance unit 2 through the display interface 7, or may input the conveyance frequency of the article P. In the latter case, the conveyance speed of the conveyance unit 2 is calculated by the control unit 8. The control unit 8 may use a value obtained by multiplying the input speed or the calculated speed by a predetermined value (a margin value), as the conveyance speed. In this case, it is possible to correct a shift of a supply timing of the article P that has occurred upstream of the weighing apparatus 1. The margin value is, for example, 1.1 or more and 2 or less, and is designated by the operator. In a case where the margin value is 1.1, it may be displayed as 10% on the display interface 7. The margin value may be less than 1.1 or may be 1 or less. For example, in a case of intentionally reducing the production capacity of the weighing apparatus 1, the margin value is set to 1 or less.

Next, the original signal when the conveyance unit 2 is operated in a state where the article P is not conveyed (that is, when the conveyance unit 2 is idle-operated) is acquired (step S2). In step S2, for example, the weighing unit 4 acquires the original signal when the conveyance unit 2 is idle-operated for about 5 seconds at a conveyance speed designated before the weighing of the article P (designated conveyance speed). The acquired original signal is output to the control unit 8.

Next, each of the plurality of digital filters is applied to the acquired original signal (step S3). In step S3, the filter unit 22 performs the filtering processing by applying each of the plurality of digital filters to the original signal. In this way, the filter unit 22 generates a plurality of weighing signals.

Next, standard deviations of amplitudes for each waveform after the filtering processing are compared (step S4). In step S4, first, the calculation unit 23 calculates a standard deviation of an amplitude of a waveform that is included in each of the plurality of weighing signals. Subsequently, the calculation unit 23 compares the magnitude of each standard deviation. Here, the calculation unit 23 determines a waveform in which the smallest standard deviation among a plurality of standard deviations is obtained.

Next, one digital filter among the plurality of digital filters is selected (step S5). In step S5, the calculation unit 23 selects a digital filter that is used to generate a weighing signal having a waveform in which the smallest standard deviation is obtained. The selected digital filter may be a digital filter (a default digital filter) that is used in standard setting, among the plurality of digital filters, or may be a digital filter different from the default digital filter. In other words, as a result of the execution of steps S1 to S5, the default digital filter that is used in the standard setting may be continuously selected, or a digital filter different from the default digital filter may be selected. By the above, the digital filter that is used when weighing the article P at the designated conveyance speed is automatically set and reserved before the article P is weighed.

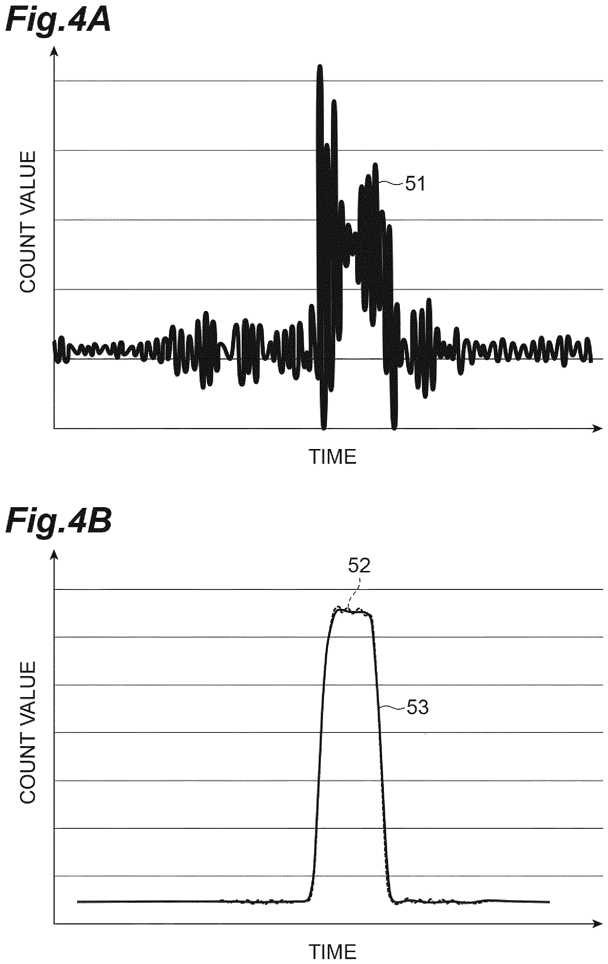

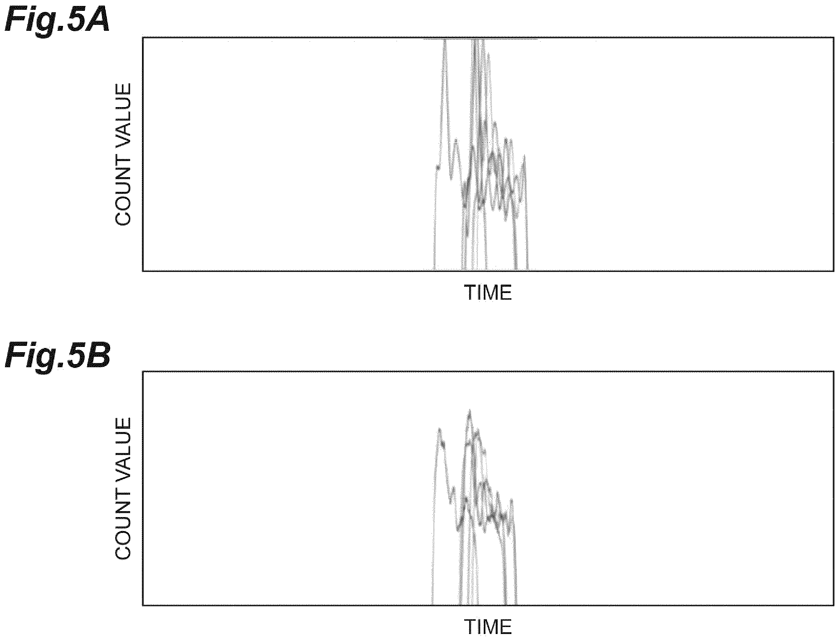

Next, the operation and effects that are exhibited by the weighing apparatus 1 according to the first embodiment will be described with reference to FIGS. 4A and 4B and FIGS. 5A and 5B. FIG. 4A is a diagram showing a waveform that is included in the original signal. FIG. 4B is a diagram showing a waveform after the filtering processing is performed on the waveform shown in FIG. 4A.

In FIG. 4A, there is shown a waveform 51 for calculating the weight of the article P that is acquired by the weighing unit 4 of the weighing apparatus 1 when the conveyance unit 2 performs conveyance at a predetermined speed. The waveform includes noise caused by the weighing apparatus 1 and the surroundings thereof, or the like. Therefore, usually, the noise is removed by performing the filtering processing on the waveform.

In FIG. 4B, waveforms 52 and 53 after the filtering processing is performed on the waveform 51 is shown. The waveform 52 is a waveform obtained by applying the digital filter (default digital filter) that is used for the standard setting, among the plurality of digital filters. The waveform 53 is a waveform obtained by applying one digital filter different from the default digital filter, among the plurality of digital filters. According to FIG. 4B, the noise of the waveform 53 tends to be removed more than that of the waveform 52. Accordingly, when the weighing apparatus 1 weighs the article P at the predetermined speed, it is estimated that the weight of the article P is accurately measured by applying the one digital filter rather than the default digital filter.

In order to confirm the above estimation, the weighing results of a plurality of articles P will be compared and examined below. FIG. 5A is an enlarged view showing a plurality of weighing results that are obtained by applying the default digital filter. FIG. 5B is an enlarged view showing a plurality of weighing results that are obtained by applying one digital filter different from the default digital filter. As shown in FIGS. 5Aand 5B, the amplitudes of the plurality of waveforms become smaller when the one digital filter is applied than when the default digital filter is applied. Therefore, when the one digital filter is applied, the standard deviation of the amplitude of the waveform also becomes smaller. Therefore, when the weighing apparatus 1 weighs the article P at the predetermined speed, it is found that the weighing performance of the weighing apparatus 1 can be sufficiently exhibited when the one digital filter is applied, rather than when the default digital filter is applied.

Here, according to the weighing apparatus of the first embodiment, the calculation unit 23 of the control unit 8 selects one digital filter among the plurality of digital filters, based on the result of applying each of the plurality of digital filters to the original signal that is obtained during the idle operation of the conveyance unit 2. In this way, a digital filter suitable for the situations of the weighing apparatus 1 and the surroundings thereof (for example, vibration of the weighing apparatus 1 itself, vibration that is transmitted from the outside to the weighing apparatus 1, and the like) can be automatically selected. In other words, a digital filter that can appropriately remove noise that is generated by the weighing apparatus 1 and the surroundings thereof can be automatically selected. Therefore, for example, even if the designer or the like of the weighing apparatus 1 does not set based on the result of applying each of the plurality of digital filters, the weighing apparatus 1 can accurately weigh the article P by using the digital filter in which noise is appropriately removed. Therefore, the weighing apparatus 1 can sufficiently exhibit the weighing performance while improving the work efficiency.

In the first embodiment, the calculation unit 23 of the control unit 8 compares the standard deviations of the amplitudes for each waveform that is obtained by applying each of the plurality of digital filters to the original signal, and selects a digital filter in which the smallest standard deviation is obtained. Therefore, it becomes easy to automatically select a digital filter suitable for the situations of the weighing apparatus 1 and the surroundings thereof.

In the first embodiment, the control unit 8 has the storage unit 25 that stores the date and time when one digital filter among the plurality of digital filters was selected, the one digital filter, and the original signal. In this case, the history of the weighing situation by the weighing apparatus 1 can be easily confirmed.

Hereinafter, a modification example (a first modification example) of the above embodiment will be described. In the following modification example, description of parts overlapping with those in the above embodiment will be omitted. Therefore, in the following, parts different from those in the above embodiment will be mainly described.

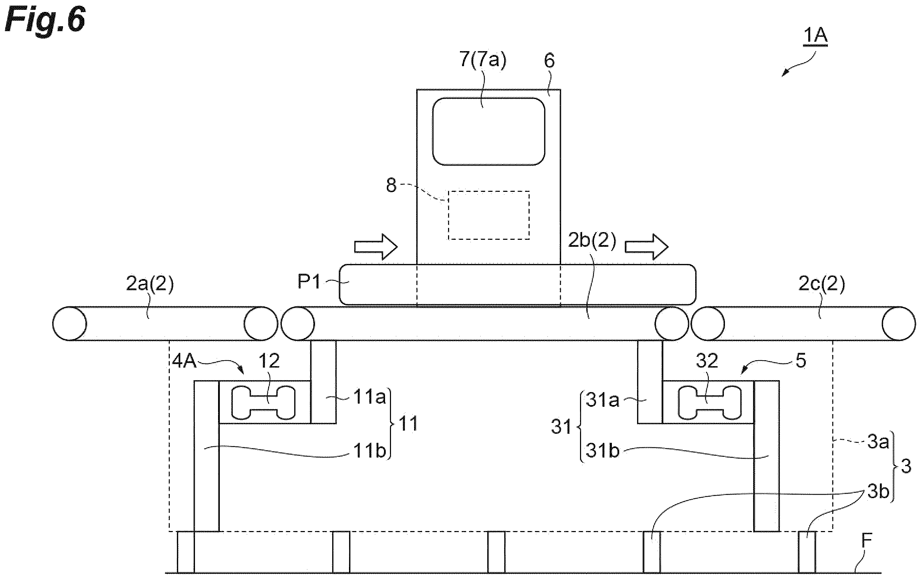

FIG. 6 is a schematic configuration diagram of a weighing apparatus according to the first modification example. As shown in FIG. 6, a weighing apparatus 1A is an apparatus for weighing an article P1 that is long along the conveying direction, and has a first weighing unit 4A and a second weighing unit 5. The first weighing unit 4A is located on the upstream side of the second conveyor unit 2b. The second weighing unit 5 is located on the downstream side of the second conveyor unit 2b and has a strain body 31 and a weighing cell 32. The strain body 31 has a movable rigid body part 31a that supports the second conveyor unit 2b and a fixed rigid body part 31b that is fixed to the frame 3, similarly to the strain body 11.

When the conveyance unit 2 is in operation and the article P1 is not conveyed by the conveyance unit 2 (that is, during the idle operation of the conveyance unit), the filter unit 22 of the control unit 8 selects one digital filter among the plurality of digital filters with respect to, for example, each of a first original signal output from the first weighing unit 4A and a second original signal output from the second weighing unit 5. In this case, the digital filter that is selected based on the first original signal and the digital filter that is selected based on the second original signal may be the same as each other or may be different from each other. In this case, during the operation of the conveyance unit 2 and during the conveyance of the article P1 by the conveyance unit 2, a weighing signal that is obtained by performing the filtering processing on the original signal that is output from the first weighing unit 4A and a weighing signal that is obtained by performing the filtering processing on the original signal that is output from the second weighing unit 5 are added up. The calculation unit 23 of the control unit 8 generates the weighing value of the article P1, based on the total weighing signal obtained in the above manner.

Alternatively, the filter unit 22 of the control unit 8 selects one digital filter among the plurality of digital filters with respect to, for example, the total original signal of the first original signal output from the first weighing unit 4A and the second original signal output from the second weighing unit 5. In this case, the control unit 8 first generates a total original signal obtained by adding up the first original signal output from the first weighing unit 4A and the second original signal output from the second weighing unit 5. Then, the calculation unit 23 selects one digital filter among the plurality of digital filters with respect to the total original signal. In this case, during the operation of the conveyance unit 2 and during the conveyance of the article P1 by the conveyance unit 2, the original signal that is output from the first weighing unit 4A and the original signal that is output from the second weighing unit 5 are added up. The calculation unit 23 of the control unit 8 generates the weighing value of the article P1, based on a weighing signal that is obtained by performing the filtering processing on the total original signal obtained in the above manner.

Also in the weighing apparatus 1A according to the first modification example, the same operation and effects as those in the first embodiment are exhibited. In addition, according to the first modification example, the weight of the article P1 that is long along the conveying direction can be accurately measured.

### (Second Embodiment)

Hereinafter, a second embodiment of the present disclosure will be described. In the following, description of parts overlapping with those in the first embodiment and the first modification example will be omitted. Therefore, in the following, parts different from those in the first embodiment and the first modification example will be mainly described.

A weighing apparatus according to the second embodiment has the same apparatus configuration as the weighing apparatus 1 according to the first embodiment (refer to FIGS. 1 and 2), and has additional functions that are described below. The display interface 7 according to the second embodiment displays, for example, a plurality of conveyance speeds and accuracy information corresponding to each of the plurality of conveyance speeds. The plurality of conveyance speeds include, for example, a conveyance speed (designated conveyance speed) of the conveyance unit 2 that is designated through the touch panel 7a, and a speed (change candidate speed) that is obtained by multiplying the designated conveyance speed by a predetermined value (a margin value). The designated conveyance speed according to the second embodiment is, for example, the minimum speed (limit speed) for conveying the article P such that two or more articles P are not ridden on the second conveyor unit 2b of the conveyance unit 2. The designated conveyance speed is calculated based on, for example, the conveyance frequency of the article P. By multiplying this limit speed by the margin value, variation in the interval between the articles P is allowed. In this way, for example, a shift of a supply timing of the article P that occurs upstream of the weighing apparatus can be absorbed. The margin value is, for example, 1.1 or more and 2 or less. For example, in a case where the margin value is 1.25, variation in the interval between the articles P is allowed up to 25%. The change candidate speed is not limited to one speed. Therefore, the plurality of conveyance speeds include three or more conveyance speeds. The margin value may be less than 1.1 or may be 1 or less.

In the second embodiment, the display interface 7 displays the plurality of conveyance speeds and the accuracy information for each of the plurality of conveyance speeds in association with each other. For example, the display interface 7 displays the designated conveyance speed and the accuracy information when the article P is weighed at the designated conveyance speed in association with each other. At this time, the designated conveyance speed and the accuracy information may be displayed on the display interface 7 at the same time, or may be displayed at different timings. In the former case, the designated conveyance speed and the accuracy information may be enclosed in the same frame or the like. In this way, the relationship with each other may be clarified. In the latter case, for example, in a case where the designated conveyance speed is selected, the accuracy information may be displayed. In addition, the display interface 7 displays a certain change candidate speed and accuracy information when the article P is weighed at the change candidate speed in association with each other. At this time, the display interface 7 displays at least the designated conveyance speed and the change candidate speed at the same time. The display interface 7 may display accuracy information corresponding to each speed at the same time as each speed, or may display the accuracy information at different timings.

The control unit 8 according to the second embodiment operates the conveyance unit 2 at a plurality of conveyance speeds when the conveyance unit 2 is in operation and the article is not conveyed by the conveyance unit 2 (during the idle operation of the conveyance unit 2), and selects and stores corresponding one digital filter among the plurality of digital filters with respect to each of the plurality of conveyance speeds. Further, the control unit 8 operates the conveyance unit 2 at a plurality of conveyance speeds during the idle operation of the conveyance unit 2, and acquires accuracy information corresponding to each of the plurality of conveyance speeds.

In the second embodiment, both of information that is output from the weighing unit 4 when the conveyance unit 2 is idle-operated at a designated conveyance speed that is input through the display interface 7 and information that is output from the weighing unit 4 when the conveyance unit 2 is idle-operated at a speed obtained by multiplying the designated conveyance speed by a margin value correspond to the original signal that is obtained when the conveyance unit 2 is in operation and the article P is not conveyed by the conveyance unit 2. That is, the information that is output from the weighing unit 4 when the conveyance unit 2 is idle-operated at each of the plurality of conveyance speeds corresponds to the original signal that is obtained when the conveyance unit 2 is in operation and the article is not conveyed by the conveyance unit 2. Therefore, the filter unit 22 of the second embodiment perform the filtering processing by applying each of the plurality of digital filters to the plurality of original signals obtained at each of the plurality of conveyance speeds.

For example, in a case where the plurality of conveyance speeds have a first speed to a third speed, during the idle operation of the conveyance unit 2, an eleventh original signal to a thirteenth original signal are output from the weighing unit 4. Here, for example, in a case where the plurality of digital filters have the first filter to the third filter, the filtering processing is performed on each of the eleventh original signal to the thirteenth original signal by each of the first filter to the third filter. In this way, an eleventh weighing signal that is obtained by applying the first filter to the eleventh original signal, a twelfth weighing signal that is obtained by applying the second filter to the eleventh original signal, a thirteenth weighing signal that is obtained by applying the third filter to the eleventh original signal, a fourteenth weighing signal that is obtained by applying the first filter to the twelfth original signal, a fifteenth weighing signal that is obtained by applying the second filter to the twelfth original signal, a sixteenth weighing signal that is obtained by applying the third filter to the twelfth original signal, a seventeenth weighing signal that is obtained by applying the first filter to the thirteenth original signal, an eighteenth weighing signal that is obtained by applying the second filter to the thirteenth original signal, and a nineteenth weighing signal that is obtained by applying the third filter to the thirteenth original signal are obtained.

The calculation unit 23 of the second embodiment selects a digital filter in which the smallest standard deviation is obtained, at each of the plurality of conveyance speeds. For example, in a case where the conveyance speed is set to be the first speed and the plurality of digital filters have the first filter to the third filter, the calculation unit 23 calculates an eleventh standard deviation of an amplitude of a waveform that is included in the eleventh weighing signal, a twelfth standard deviation of an amplitude of a waveform that is included in the twelfth weighing signal, and a thirteenth standard deviation of an amplitude of a waveform that is included in the thirteenth weighing signal. Subsequently, the calculation unit 23 specifies a weighing signal in which the smallest value among the eleventh standard deviation, the twelfth standard deviation, and the thirteenth standard deviation is obtained. Then, the calculation unit 23 selects a digital filter applied at the weighing signal specified at the first speed. Further, in a case where the conveyance speed is set to be the second speed, the calculation unit 23 calculates a fourteenth standard deviation of an amplitude of a waveform that is included in the fourteenth weighing signal, a fifteenth standard deviation of an amplitude of a waveform that is included in the fifteenth weighing signal, and a sixteenth standard deviation of an amplitude of a waveform that is included in the sixteenth weighing signal. Subsequently, the calculation unit 23 specifies a weighing signal in which the smallest value among the fourteenth standard deviation, the fifteenth standard deviation, and the sixteenth standard deviation is obtained. Then, the calculation unit 23 selects a digital filter applied at the weighing signal specified at the second speed. The digital filter selected at the first speed and the digital filter selected at the second speed may be the same as each other or may be different from each other.

The storage unit 25 of the second embodiment stores the date and time when one digital filter among the plurality of digital filters was selected. At this time, the storage unit 25 stores the date and time when one digital filter among the plurality of digital filters was selected with respect to each of the plurality of original signals obtained during the idle operation of the conveyance unit 2. In addition, the storage unit 25 stores the one digital filter selected at the date and time, the original signal itself, and the weighing signal and accuracy information based on the original signal, at each of the plurality of conveyance speeds.

Next, a method of automatically selecting a digital filter by the weighing apparatus according to the second embodiment will be described. In the second embodiment, first, steps S1 to S5 are executed in order, similarly to the first embodiment.

Next, the conveyance unit 2 is idle-operated at a conveyance speed obtained by multiplying the designated conveyance speed by the margin value. Then, after step S2 is executed during the idle operation, steps S3 to S5 are executed in order. That is, steps S2 to S5 are executed again at a conveyance speed different from the designated conveyance speed. In this manner, steps S2 to S5 are executed each time the conveyance speed is changed. In this way, the control unit 8 operates the conveyance unit 2 at a plurality of conveyance speeds during the idle operation of the conveyance unit 2, and selects and stores corresponding one digital filter among the plurality of digital filters with respect to each of the plurality of conveyance speeds. More specifically, the control unit 8 selects and stores one digital filter among the plurality of digital filters with respect to each of the plurality of conveyance speeds, based on the result of applying each of the plurality of digital filters to the original signal obtained at each of the plurality of conveyance speeds, during the idle operation of the conveyance unit 2. By the above, for example, before the weighing of the article P is performed, a digital filter that is used when weighing the article P at each of the plurality of conveyance speeds is automatically set and reserved. Then, the control unit 8 operates the conveyance unit 2 at a plurality of conveyance speeds during the idle operation of the conveyance unit 2, and acquires and stores accuracy information corresponding to each of the plurality of conveyance speeds.

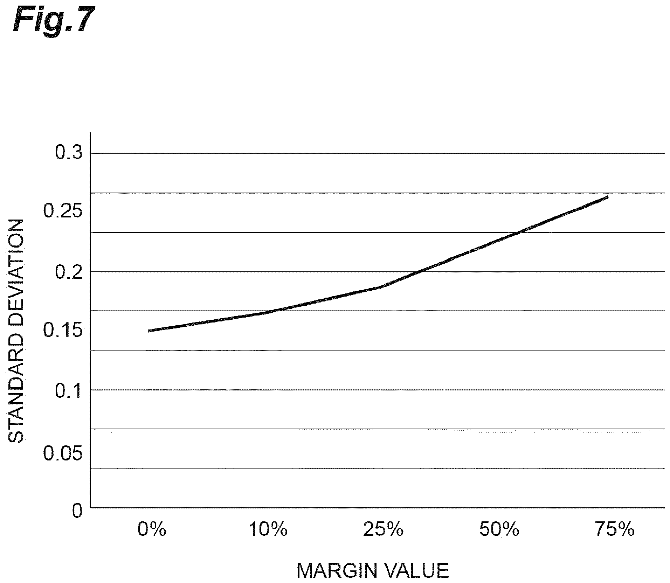

Next, an example of a method of designating the conveyance speed of the conveyance unit 2 of the weighing apparatus according to the second embodiment will be described with reference to FIG. 7. FIG. 7 is a diagram showing an example of a screen that is displayed on the display interface 7. As shown in FIG. 7, at least a part of the display interface 7 displays a graph showing a plurality of conveyance speeds, and accuracy information that is obtained by performing the filtering processing on the original signal corresponding to each of the plurality of conveyance speeds. The vertical axis of the graph represents a magnitude of a standard deviation of an amplitude of a waveform corresponding to the accuracy information. The horizontal axis of the graph represents a magnification to be multiplied by the designated conveyance speed. "0%" shown in FIG. 7 corresponds to the designated conveyance speed. That is, "0%" indicates that the designated conveyance speed is not multiplied by the margin value. "10%" shown in FIG. 7 indicates that the designated conveyance speed is multiplied by the margin value "1.1". That is, "10%" indicates that the designated conveyance speed has increased by 10%. Similarly, "25%" shown in FIG. 7 indicates that the designated conveyance speed is multiplied by the margin value "1.25".

As shown in FIG. 7, it is found that the larger the margin value, the larger the standard deviation tends to be. As described above, the smaller the standard deviation, the higher the weighing accuracy of the weighing apparatus tends to be. Here, the display interface 7 shows the standard deviation of the amplitude of the waveform at each of the plurality of conveyance speeds. Therefore, the operator who sees the display interface 7 can easily confirm the weighing accuracy of the weighing apparatus at each of the plurality of conveyance speeds. Accordingly, the operator can easily select a conveyance speed that is within the range of good weighing accuracy, through the touch panel 7a. For example, the operator operates the operation unit that is displayed on the display interface 7, whereby the conveyance unit 2 is operated at a desired conveyance speed. That is, the operator can designate the conveyance speed of the conveyance unit 2 through the touch panel 7a, which is an input unit, while referring to the figure that is displayed on the display interface 7. The operation unit may overlap the screen that is displayed on the display interface 7. In this case, for example, the operator can set or change the conveyance speed of the conveyance unit 2 by touching a location or the like showing the margin value on the display interface 7. In this way, the operator can easily operate the conveyance unit 2 at a conveyance speed according to the selected margin value. At this time, a digital filter corresponding to the conveyance speed is selected.

In the second embodiment, the storage unit 25 stores a standard deviation of an amplitude of a waveform serving as a threshold value. The control unit 8 compares the stored threshold value with the standard deviation corresponding to the conveyance speed designated through the input unit. In a case where the standard deviation exceeds the threshold value, the display interface 7 displays a warning screen under the control of the control unit 8. The operator can reexamine whether or not to perform the weighing of the article P by the weighing apparatus with relatively low weighing accuracy. The operator may cancel the warning screen by withdrawing the designation of the conveyance speed or designating another conveyance speed. Alternatively, the operator may continue to operate the conveyance unit 2 at the designated conveyance speed after canceling the warning screen.

The display interface 7 can display the screen shown in FIG. 7, for example, even after the weighing apparatus has started the weighing of the article P. In other words, the display interface 7 can display a plurality of conveyance speeds, and a weighing signal and/or accuracy information corresponding to each of the plurality of conveyance speeds, for example, even after the weighing apparatus has started the weighing of the article P.

Also in the weighing apparatus according to the second embodiment described above, the same operation and effects as those in the first embodiment are exhibited. Here, when the conveyance speed of the weighing apparatus 1 according to the first embodiment is changed, there is a case where the vibration of the weighing apparatus 1 changes. In addition, for example, when the production amount of the article P by the production line of the article P that includes the weighing apparatus 1 is changed, the conveyance speed or the like of not only the weighing apparatus 1 but also another apparatus is reset. In these cases, not only the vibration caused by the weighing apparatus 1 but also the vibration caused by the other apparatus changes. Accordingly, for example, a digital filter selected at a predetermined conveyance speed is not always the optimum filter even at a conveyance speed other than the predetermined conveyance speed. Therefore, in order to sufficiently exhibit the weighing performance of the weighing apparatus 1 even after the conveyance speed of the weighing apparatus 1 is changed, it is necessary to reselect the optimum digital filter. The reselection of the digital filter imposes a heavy burden on a skilled worker, a designer, or the like of the weighing apparatus 1.

In contrast, according to the weighing apparatus of the second embodiment, the control unit 8 selects and stores corresponding one digital filter among the plurality of digital filters with respect to each of the plurality of conveyance speeds, at the time of the idle operation of the conveyance unit 2. In this way, a digital filter suitable for the situations of the weighing apparatus and the surrounding thereof (for example, vibration of the weighing apparatus itself, vibration that is transmitted from the outside to the weighing apparatus, and the like) can be automatically selected. In addition, even in a case where the conveyance speed of the article P by the conveyance unit 2 is changed through the touch panel 7a during the weighing of the article P by the weighing apparatus, a digital filter suitable for the changed conveyance speed is automatically selected. Therefore, for example, even if the designer or the like of the weighing apparatus does not work every time the conveyance speed of the article P by the conveyance unit 2 is changed, the weight of the article P can be accurately measured. Therefore, the weighing apparatus can sufficiently exhibit the weighing performance while improving the work efficiency.

In addition, the control unit 8 acquires accuracy information corresponding to each of the plurality of conveyance speeds at the time of the idle operation of the conveyance unit 2. In this way, the operator or the like can easily confirm the weighing accuracy of the article for each conveyance speed. Therefore, when the conveyance speed of the conveyance unit 2 is changed, it becomes easy to eliminate a conveyance speed having a relatively low weighing accuracy. Accordingly, the determination of the conveyance speed can be expedited. In addition, the weighing accuracy of the article at the determined conveyance speed can be set to a high level. Therefore, for this reason as well, the weighing apparatus according to the second embodiment can sufficiently exhibit the weighing performance while improving the work efficiency.

In the second embodiment, the weighing apparatus includes the display interface 7 that displays a plurality of conveyance speeds and accuracy information for each of the plurality of conveyance speeds in association with each other. Therefore, for example, when the operator tries to change the conveyance speed of the article P by the conveyance unit 2, it is possible to easily confirm a difference in weighing accuracy of the article P between the conveyance speeds before and after the change.

In the second embodiment, the calculation unit 23 of the control unit 8 calculates accuracy information, based on the standard deviation of the amplitude of the waveform that is obtained by performing the filtering processing on the original signal. Therefore, the calculation unit 23 can easily calculate the accuracy information.

In the second embodiment, the display interface 7 displays a warning screen in a case where the standard deviation corresponding to the conveyance speed designated from the outside exceeds a predetermined threshold value. Therefore, it becomes easy for the operator to sufficiently exhibit the weighing performance of the weighing apparatus 1 even at the changed conveyance speed.

In the second embodiment, the display interface 7 may display a weighing pitch of the article P that is calculated according to the conveyance speed, the dimensions of the article P along the conveying direction by the conveyance unit 2, and the conveyance frequency of the article P. In this case, it becomes easy for the operator to change the conveyance speed of the article P by the conveyance unit 2 within an appropriate range.

Hereinafter, a modification example (a second modification example) of the second embodiment will be described. In the following second modification example, description of parts overlapping with those in the second embodiment will be omitted. Therefore, in the following, parts different from those in the second embodiment will be mainly described. A weighing apparatus according to the second modification example has the same configuration as that of the weighing apparatus 1A (refer to FIG. 6) according to the first modification example, and also has an additional function described below.

During the idle operation of the conveyance unit 2, the filter unit 22 of the control unit 8 selects one digital filter among the plurality of digital filters with respect to, for example, each of a twenty-first original signal that is output from the first weighing unit 4A and a thirty-first original signal that is output from the second weighing unit 5. In this case, a digital filter that is selected based on the twenty-first original signal and a digital filter that is selected based on the thirty-first original signal may be the same as each other or may be different from each other. In this case, during the operation of the conveyance unit 2 and during the conveyance of the article P1 by the conveyance unit 2, a weighing signal that is obtained by performing the filtering processing on the original signal that is output from the first weighing unit 4A and a weighing signal that is obtained by performing the filtering processing on the original signal that is output from the second weighing unit 5 are added up. The control unit 8 generates the weighing value of the article P1, based on the total weighing signal obtained in the above manner.

Alternatively, the filter unit 22 of the control unit 8 selects one digital filter among the plurality of digital filters with respect to, for example, a total original signal of the twenty-first original signal that is output from the first weighing unit 4A and the thirty-first original signal that is output from the second weighing unit 5. In this case, the control unit 8 first generates a total original signal obtained by adding up the twenty-first original signal output from the first weighing unit 4A and the thirty-first original signal output from the second weighing unit 5 during the idle operation of the conveyance unit 2. Then, the calculation unit 23 selects one digital filter among the plurality of digital filters with respect to the total original signal. In this case, during the operation of the conveyance unit 2 and during the conveyance of the article P1 by the conveyance unit 2, the original signal that is output from the first weighing unit 4A and the original signal that is output from the second weighing unit 5 are added up. The control unit 8 generates the weighing value of the article P1, based on a weighing signal that is obtained by performing the filtering processing on the total original signal obtained in the above manner.

In the second modification example, similarly to the second embodiment, the conveyance unit 2 of the weighing apparatus 1A performs idle operation at a plurality of conveyance speeds including the designated conveyance speed. Then, the control unit 8 selects one digital filter with respect to each of the plurality of conveyance speeds.

Also in the weighing apparatus according to the second modification example, the same operation and effect as those in the second embodiment are exhibited. In addition, according to the second modification example, the weight of the article P1 that is long along the conveying direction can be accurately measured.

### (Third Embodiment)

Hereinafter, a third embodiment of the present disclosure will be described. In the following, description of parts overlapping with those in the first and second embodiments and the first and second modification examples will be omitted. Therefore, in the following, parts different from those in the first and second embodiments and the first and second modification examples will be mainly described.

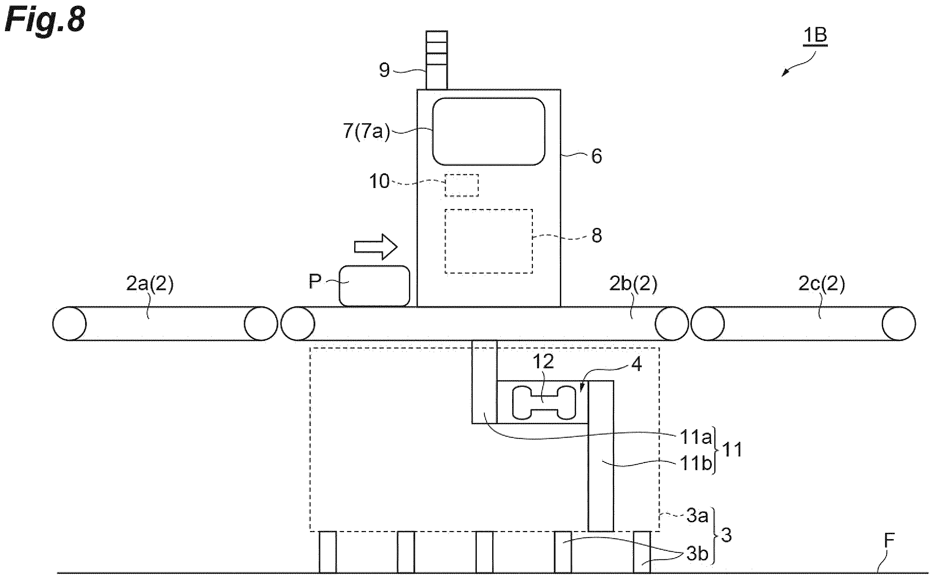

FIG. 8 is a schematic configuration diagram of a weighing apparatus according to the third embodiment. A weighing apparatus 1B shown in FIG. 8 includes a notification lamp 9 and a speaker 10, in addition to the configuration of the weighing apparatus 1. The notification lamp 9 and the speaker 10 may be parts of the operation unit 6.

The weighing unit 4 outputs an original signal corresponding to a weighing component of a force that is applied to the second conveyor unit 2b. The weighing component is a component in a vertical downward direction of the force (load) that is applied to the second conveyor unit 2b. In a case where the article P is not located on the second conveyor unit 2b during the operation of the conveyance unit 2, a force due to the vibration that is generated by the weighing apparatus 1B and a force due to the vibration that is generated by the surroundings of the weighing apparatus 1B are applied to the second conveyor unit 2b. The vibration that is generated by the weighing apparatus 1B includes vibration that is accompanied by the operation of the conveyance unit 2, vibration that occurs when the article P is conveyed to the conveyance unit 2, and the like. The vibration that is generated by the surroundings of the weighing apparatus 1B includes, for example, vibration that is transmitted from the floor surface on which the weighing apparatus 1B is placed (floor vibration), and the like. The floor vibration is, for example, vibration caused by an apparatus installed in the production line of the article P that includes the weighing apparatus 1B, an apparatus that is not included in the production line, or the like. In a case where the article P is located on the second conveyor unit 2b during the operation of the conveyance unit 2, in addition to the force due to the vibration that is generated by the weighing apparatus 1B and the force due to the vibration that is generated by the surroundings of the weighing apparatus 1B, a force due to gravity acting on the article P is applied to the second conveyor unit 2b.

Various information that is output from the control unit 8 of the third embodiment includes processing information such as the date and time when first accuracy information (described later) for evaluating the weighing accuracy was generated based on the weighing signal, the type of the digital filter applied to the generation of the first accuracy information, and detection result information about the detection result of abnormality of the weighing unit 4. The detection result information includes at least information that the detection result of abnormality of the weighing unit 4 is "detection of abnormality of the weighing unit 4" or "non-detection of abnormality of the weighing unit 4". The various information can be output to and displayed on the display interface 7. It can also be said that the control unit 8 is a processing unit that generates a weighing signal by applying a digital filter to the original signal and performs the weighing processing, based on the weighing signal. The weighing processing means processing of generating a weighing value of the article P in a case where the article P is located on the second conveyor unit 2b during the operation of the conveyance unit 2.

The notification lamp 9 is a signal tower that emits light according to the operation situation or the like of the weighing apparatus 1B. The notification lamp 9 can emit, for example, red, yellow, and green light. The speaker 10 emits a sound (for example, a buzzer sound) according to the operation situation or the like of the weighing apparatus 1B. The display interface 7 and the notification lamp 9 function as a notification unit that emits light according to the operation situation or the like of the weighing apparatus 1B. The speaker 10 functions as a notification unit that emits a sound according to the operation situation or the like of the weighing apparatus 1B.

The operation situation of the weighing apparatus 1B includes abnormality of the weighing unit 4 that occurs after the generation of the first accuracy information. The abnormality of the weighing unit 4 includes abnormality of a weight value (so-called zero point) that serves as a reference for weighing. The generation of the first accuracy information is performed, for example, after the weighing apparatus 1B is installed at an installation location (for example, the production line of the article P that includes the weighing apparatus 1B, or the like) and before the production and weighing of the article P (for example, before the start of weight inspection). For example, when the accuracy information varies beyond an allowable range in which a predetermined margin is expected with respect to the generated first accuracy information, it can be determined that abnormality has occurred in the weighing unit 4. When the abnormality of the weighing unit 4 occurs, it is considered that, for example, the weighing accuracy of the weighing apparatus 1B decreases with time.

The calculation unit 23 of the third embodiment performs the weighing processing of calculating the weight of the article P, based on the weighing signal that is output from the filter unit 22, in a case where the article P is located on the second conveyor unit 2b during the operation of the conveyance unit 2. The calculation unit 23 selects one digital filter among the plurality of digital filters after the weighing apparatus 1B has been installed at the installation location and before the production and weighing of the article P. In the third embodiment, the calculation unit 23 first generates a plurality of accuracy information based on a plurality of weighing signals obtained during the idle operation of the conveyance unit 2 before the production and weighing of the article P. Subsequently, the calculation unit 23 compares the plurality of accuracy information. Here, the first accuracy information, which is the most appropriate accuracy information among the plurality of weighing signals, is served as accuracy information for evaluating the weighing accuracy, based on the weighing signals. The calculation unit 23 determines and specifies the most appropriate accuracy information as the first accuracy information. The accuracy information is calculated based on, for example, a standard deviation of an amplitude of a waveform that is included in the weighing signal. In the third embodiment, the first accuracy information is a standard deviation σₐ of the amplitude of the waveform that is included in the weighing signal. Then, the calculation unit 23 outputs to the storage unit 25 the date and time when the first accuracy information was generated and the type of the digital filter applied to the generation of the first accuracy information, as the first accuracy information and the information about the selected digital filter. The storage unit 25 stores the date and time when the first accuracy information was generated, and the type of the digital filter applied to the generation of the first accuracy information.

Here, the calculation unit 23 performs abnormality detection processing for detecting abnormality of the weighing unit 4 that occurs after the generation of the first accuracy information, based on the stored first accuracy information. The weighing signal that is used for the abnormality detection processing is obtained, for example, in a period in which the conveyance unit 2 is in operation and the article P is not located on the second conveyor unit 2b, after the start of the production of the article P. The period is, for example, a period between weight inspections of a plurality of types of articles P, or the like.

The calculation unit 23 further generates, for example, second accuracy information for evaluating a temporal change in the weighing accuracy, after the generation of the first accuracy information. The second accuracy information is accuracy information for detecting the abnormality of the weighing unit 4 by using the first accuracy information as a reference. The second accuracy information is calculated based on, for example, a standard deviation of an amplitude of a waveform that is included in the weighing signal after the generation of the first accuracy information. The calculation result may be the standard deviation itself of the amplitude of the waveform, or may be a parameter based on the standard deviation. The second accuracy information is a standard deviation σ_{b} of the amplitude of the waveform that is included in the weighing signal after the generation of the first accuracy information. The standard deviation σ_{b} of the second accuracy information can be set to be a standard deviation of an amplitude of a waveform that is included in the weighing signal that is generated in a fixed period set in advance, after the generation of the first accuracy information (for example, after the start of the production of the article P). The fixed period (hereinafter, also referred to as a standard deviation acquisition period) corresponds to a continuous or intermittent total period of the period during which the conveyance unit 2 is in operation and the article P is not located on the second conveyor unit 2b, after the start of the production of the article P. The standard deviation acquisition period may be, for example, a total of 30 minutes. However, it is not particularly limited. As an example, the standard deviation σ_{b} may be a standard deviation calculated by using the value of an amplitude of a waveform that is included in a weighing signal that is generated in the standard deviation acquisition period. In the third embodiment, the standard deviation σ_{b} is calculated by using the values (here, 3000 values) of the amplitudes sampled at a frequency of 100 times per minute.

The calculation unit 23 may detect the abnormality of the weighing unit 4, based on the comparison result between the first accuracy information and the second accuracy information, as the abnormality detection processing. For example, in a case where the standard deviation σₐ of the first accuracy information and the standard deviation σ_{b} of the second accuracy information are compared and the standard deviation σ_{b} is larger than a threshold value Th1 obtained by multiplying the standard deviation σₐ by a predetermined margin, the calculation unit 23 detects the abnormality of the weighing unit 4. For example, in a case where the standard deviation σ_{b} is equal to or less than the threshold value Th1, the calculation unit 23 does not detect the abnormality of the weighing unit 4. As the predetermined margin, for example, a predetermined coefficient in a range of about 1.5 to 3.0 can be used. In a case where the calculation unit 23 detects the abnormality of the weighing unit 4, the output unit 24 may or may not stop the weighing apparatus 1B. Further, the output unit 24 may graphically display the standard deviation σ_{b} of the second accuracy information on the touch panel 7a. In this case, the output unit 24 may further display the standard deviation σₐ of the first accuracy information on the touch panel 7a.

In a case where the abnormality of the weighing unit 4 is detected by the abnormality detection processing, the calculation unit 23 may automatically switch from the digital filter applied to the generation of the first accuracy information to a digital filter that does not detect the abnormality of the weighing unit 4. For example, in a case where the abnormality of the weighing unit 4 is detected by the abnormality detection processing, the calculation unit 23 generates third accuracy information by applying a digital filter different from the digital filter applied to the generation of the first accuracy information, based on the original signal that is generated in the standard deviation acquisition period after the detection of the abnormality of the weighing unit 4. The original signal in this case may be an original signal after the point in time when the abnormality of the weighing unit 4 is detected.

The calculation unit 23 selects, for example, any of the different digital filters and a predetermined default digital filter, based on the comparison result between the first accuracy information and the third accuracy information, and performs the weighing processing. The third accuracy information is accuracy information for evaluating the weighing accuracy at a digital filter different from the digital filter applied to the generation of the first accuracy information. The third accuracy information is calculated based on, for example, a standard deviation of an amplitude of a waveform that is included in the weighing signal that is generated in the standard deviation acquisition period after the detection of the abnormality of the weighing unit 4. The calculation result may be the standard deviation itself of the amplitude of the waveform, or may be a parameter based on the standard deviation. The third accuracy information is a standard deviation σ_{c} of the amplitude of the waveform that is included in the weighing signal that is generated in the standard deviation acquisition period after the detection of the abnormality of the weighing unit 4. The standard deviation σ_{c} of the third accuracy information is calculated, for example, in the same manner as the method at the standard deviation σ_{b}, after the detection of the abnormality of the weighing unit 4.

For example, in a case where the standard deviation σₐ of the first accuracy information and the standard deviation σ_{c} of the third accuracy information are compared and the standard deviation σ_{c} is equal to or less than the standard deviation σₐ, the calculation unit 23 switches to the digital filter applied to the generation of the third accuracy information. For example, in a case where the standard deviation σ_{c} is larger than the standard deviation σₐ, the calculation unit 23 switches to the default digital filter. The default digital filter is a digital filter that is used for the standard setting, among the plurality of digital filters, and is a digital filter having a convergence that can be widely used under a wide range of conditions, rather than giving priority to the convergence of the weighing signal under a specific condition. The digital filter switching processing by the calculation unit 23 described above may be performed automatically, or may be performed in response to an input operation to the touch panel 7a or the like by the operator. In a case where the switching processing is performed in response to the input operation, the output unit 24 may cause, for example, a predetermined character and/or image or the like to be displayed on the touch panel 7a. In this way, the operator of the weighing apparatus 1B easily performs the above input operation.

The output unit 24 of the third embodiment outputs to the display interface 7 processing information that includes, for example, at least the date and time when the first accuracy information was generated, the type of the digital filter applied to the generation of the first accuracy information, and the detection result information about the abnormality detection result, as display information. In a case where the abnormality of the weighing unit 4 is detected by the abnormality detection processing, the output unit 24 may output it to at least one of the display interface 7, the notification lamp 9, and the speaker 10 to give notice of the occurrence of the abnormality of the weighing unit 4. The notification of the occurrence of the abnormality of the weighing unit 4 is performed, for example, by the turn-on of the notification lamp 9, the buzzer sound of the speaker 10, the screen display of the touch panel 7a, the notification to a remote terminal, or the like.

The storage unit 25 of the third embodiment stores the processing information that includes, for example, at least the date and time when the first accuracy information was generated, the type of the digital filter applied to the generation of the first accuracy information, or the detection result information about the abnormality detection result. The storage unit 25 stores, for example, the standard deviation σₐ of the first accuracy information. The storage unit 25 may store the standard deviation σ_{b} of the second accuracy information and the standard deviation σ_{c} of the third accuracy information.

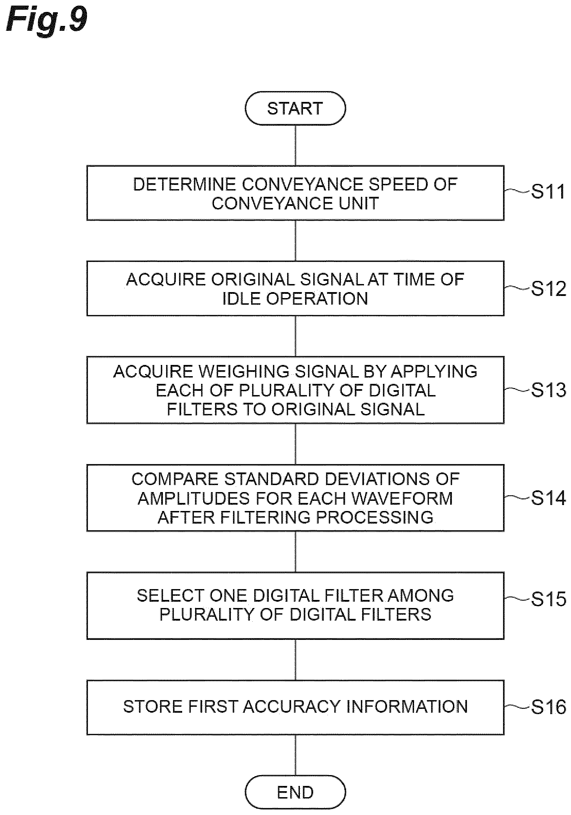

Next, each processing by the control unit 8 of the weighing apparatus 1B will be described with reference to FIGS. 9 to 11. FIG. 9 is a flowchart showing the first accuracy information generation processing of the weighing apparatus 1B.

As shown in FIG. 9, first, similarly to steps S1 and S2 of the first embodiment, the conveyance speed of the conveyance unit 2 is determined (step S11), and an original signal at the time of the idle operation of the conveyance unit 2 is acquired (step S12). Next, similarly to step S3 of the first embodiment, each of the plurality of digital filters is applied to the acquired original signal to acquire a plurality of weighing signals (step S13). Next, similarly to steps S4 and S5 of the first embodiment, the standard deviations of the amplitudes for each waveform after the filtering processing are compared (step S14), and one digital filter among the plurality of digital filters is selected (step S15). In step S14, the calculation unit 23 determines a waveform in which the smallest standard deviation (the standard deviation σₐ of the first accuracy information) among the plurality of standard deviations is obtained. Then, the first accuracy information is stored (step S16). In step S16, the storage unit 25 stores the standard deviation σₐ as the first accuracy information. By the above, the digital filter that is used when weighing the article P at the designated conveyance speed is automatically set and reserved.

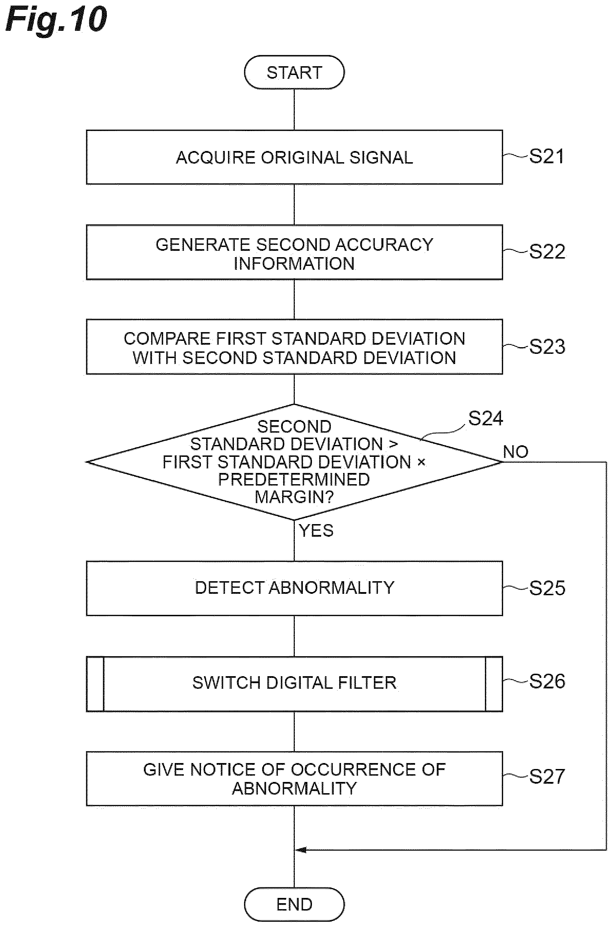

FIG. 10 is a flowchart showing the abnormality detection processing of the weighing apparatus. The processing of FIG. 10 is performed after the generation of the first accuracy information (for example, after the start of the production of the article P) and in a period in which the conveyance unit 2 is in operation.

The original signal when the conveyance unit 2 is operated in a state where the article P is not conveyed is acquired (step S21). In step S21, for example, the weighing unit 4 acquires an original signal in a period when the conveyance unit 2 is operated at the designated conveyance speed for about 5 seconds and the article P is not located on the second conveyor unit 2b. The acquired original signal is output to the control unit 8.

The second accuracy information is generated by applying, for example, the same digital filter as that used for the generation of the first accuracy information to the original signal (step S22). In step S22, the calculation unit 23 generates the second accuracy information by applying the same digital filter as that used for the generation of the first accuracy information, based on the original signal that is generated in the standard deviation acquisition period.

Comparison of the first standard deviation (the standard deviation σₐ of the first accuracy information) with the second standard deviation (the standard deviation σ_{b} of the second accuracy information) is performed (step S23). In step S23, the calculation unit 23 compares, for example, the threshold value Th1 obtained by multiplying the standard deviation σₐ by a predetermined margin with the standard deviation σ_{b}.

Whether or not the second standard deviation is larger than the threshold value Th1 obtained by multiplying the first standard deviation by a predetermined margin is determined (step S24). For example, in a case where the second standard deviation is larger than the threshold value Th1 obtained by multiplying the first standard deviation by a predetermined margin (step S24: YES), the calculation unit 23 detects abnormality (step S25). On the other hand, for example, in a case where the second standard deviation is equal to or less than the threshold value Th1 (step S24: NO), the calculation unit 23 directly ends the processing of FIG. 10 without detecting abnormality.

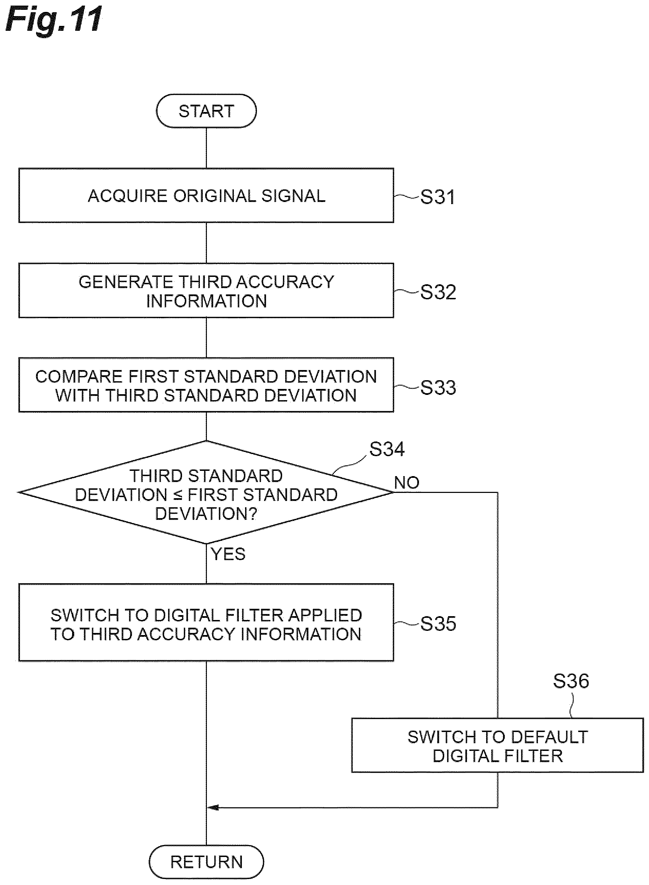

Here, switching of the digital filter is automatically performed according to the detection of the abnormality (step S26). In step S26, specifically, the digital filter switching processing shown in FIG. 11 is performed.

FIG. 11 is a flowchart showing the digital filter switching processing of the weighing apparatus. As shown in FIG. 11, an original signal that is generated in the standard deviation acquisition period after the abnormality detection is acquired (step S31). In step S31, for example, the weighing unit 4 acquires an original signal that is generated in a period when the conveyance unit 2 is operated at the designated conveyance speed for about 5 seconds and the article P is not located on the second conveyor unit 2b. The acquired original signal is output to the control unit 8.

A digital filter different from that used for the generation of the first accuracy information is applied to the original signal to generate the third accuracy information (step S32). In step S32, the calculation unit 23 generates the third accuracy information by applying a digital filter different from that used for the generation of the first accuracy information, based on the original signal that is generated in the standard deviation acquisition period after the abnormality detection.

Comparison of the first standard deviation (the standard deviation σₐ of the first accuracy information) with the third standard deviation (the standard deviation σ_{c} of the third accuracy information) is performed (step S33). In step S33, the calculation unit 23 compares, for example, the standard deviation σₐ of the first accuracy information with the standard deviation σ_{c} of the third accuracy information.

Whether or not the third standard deviation is equal to or less than the first standard deviation is determined (step S34). For example, in a case where the third standard deviation is equal to or less than the first standard deviation (step S34: YES), the calculation unit 23 switches to the digital filter applied to the third accuracy information (step S35). On the other hand, for example, in a case where the third standard deviation is larger than the standard deviation (step S34: NO), the calculation unit 23 switches to the default digital filter.

Returning to FIG. 10, the notification of the occurrence of the abnormality of the weighing unit 4 is performed (step S27). In step S27, the output unit 24 outputs it to, for example, at least one of the display interface 7, the notification lamp 9, and the speaker 10 to give notice of the occurrence of the abnormality of the weighing unit 4. As the notification of the occurrence of the abnormality of the weighing unit 4, for example, the turn-on of the notification lamp 9, the buzzer sound of the speaker 10, the screen display of the touch panel 7a, the notification to a remote terminal, or the like is performed.

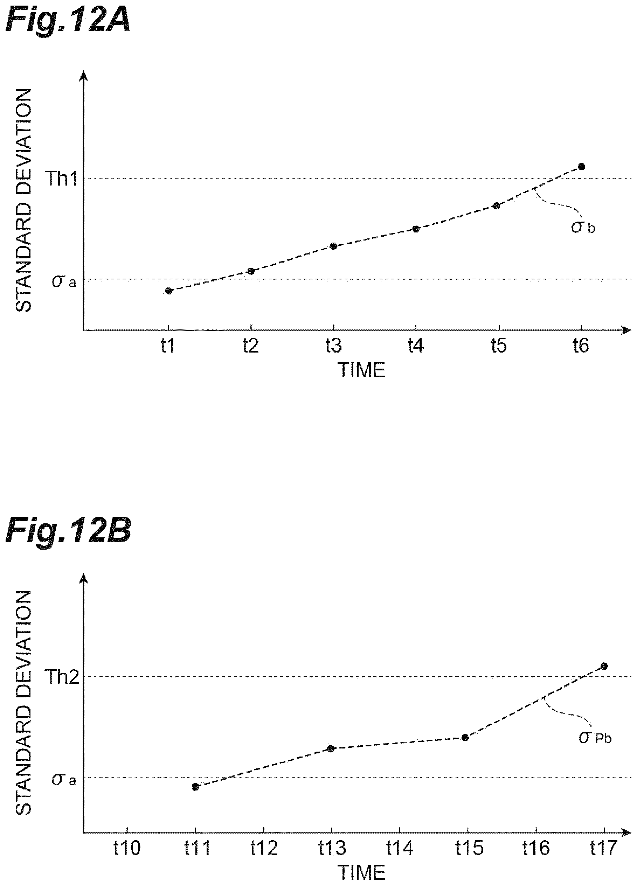

FIG. 12A is an example of a temporal change in a standard deviation in the abnormality detection processing. In FIG. 12A, there are shown the standard deviation σₐ of the first accuracy information, the threshold value Th1 obtained by multiplying the standard deviation σₐ by a predetermined margin, and the standard deviation σ_{b} of the second accuracy information. Times t1 to t6 respectively are times that are included in the standard deviation acquisition period. Times t1 to t6 may be, for example, end times of the idle operations that are performed between a plurality of weight inspections (times when a sensor for article detection is in a detection state).

In FIG. 12A, at times t1 to t5, the standard deviation σ_{b} of the second accuracy information is equal to or less than the threshold value Th1 obtained by multiplying the standard deviation σₐ by a predetermined margin. Therefore, at times t1 to t5, abnormality of the weighing unit 4 is not detected. However, after the weighing apparatus 1B has been installed at the installation location, the situations of the weighing apparatus 1B and the surroundings thereof (for example, abnormality of the weighing unit 4, vibration of the weighing apparatus 1B itself, vibration that is transmitted from the outside to the weighing apparatus 1B, and the like) increase with time, whereby the standard deviation σ_{b} of the second accuracy information increases with time. In this way, at time t6, the standard deviation σ_{b} corresponding to variation in accuracy information from the zero point increases by a certain amount or more from the initially acquired standard deviation σₐ and exceeds the threshold value Th1. That is, at time t6, the standard deviation σ_{b} of the second accuracy information becomes larger than the threshold value Th1 obtained by multiplying the standard deviation σₐ by a predetermined margin, and as a result, abnormality of the weighing unit 4 is detected at time t6.

Incidentally, apart from the detection of the abnormality of the weighing unit 4 focusing on the idle operation of the conveyance unit 2, the control unit 8 may detect, in the weighing processing (that is, during the operation of the conveyance unit 2 and during the conveyance of the article P), abnormality in an increase of transfer noise of the article P that is conveyed from the first conveyor unit 2a to the second conveyor unit 2b (abnormality in which the setting of a digital filter is inappropriate), and abnormality in article weight variation (for example, abnormality in an increase of variation in the weight itself of the article P due to abnormality of a production machine that is located upstream of the weighing apparatus 1B). These abnormalities may be detected, for example, in a case where a standard deviation of an amplitude of a waveform that is included in the weighing signal generated based on the original signal during the operation of the conveyance unit 2 and during the conveyance of the article P increases by a certain amount or more from the initially acquired standard deviation σₐ.

FIG. 12B is an example of a temporal change in a standard deviation in the weighing processing. In FIG. 12B, there are shown the standard deviation σₐ of the first accuracy information obtained based on the original signal when the conveyance unit 2 is in operation and the article P is not conveyed by the conveyance unit 2 (during the idle operation), a threshold value Th2 obtained by multiplying the standard deviation σₐ of the first accuracy information by a predetermined margin, and a standard deviation σ_{Pb} obtained after the acquisition of the first accuracy information, based on the original signal during the operation of the conveyance unit 2 and during the conveyance of the article P.

In FIG. 12B, as an example, the standard deviation σ_{Pb} is calculated for each conveyance of the article P. For example, times t10, t12, t14, and t16 respectively correspond to times when the sensor for article detection is in the detection state, and times t11, t13, t15, and t17 respectively correspond to times when the sensor for article detection is in the non-detection state. That is, the article P is located on the second conveyor unit 2b in each of the periods of times t10 to t11, t12 to t13, t14 to t15, and t16 to t17. The calculation timing of the standard deviation σ_{Pb} is not limited to this.

In FIG. 12B, the standard deviations σ_{Pb} calculated at times t11, t13, and t15 are equal to or less than the threshold value Th2. Therefore, at times t11, t13, and t15, the abnormality in an increase of the transfer noise of the article P that is conveyed from the first conveyor unit 2a to the second conveyor unit 2b and the abnormality in article weight variation are not detected. However, the transfer noise and/or the variation in the weight itself of the article P in the production machine that is located upstream of the weighing apparatus 1B increase with time, whereby the standard deviation σ_{Pb} increases with time. In this way, at time t17, the standard deviation σ_{Pb} exceeds the threshold value Th2. That is, article weighing abnormality is detected at time t17.

Hereinafter, the operation and effects that are exhibited by the weighing apparatus 1B according to the third embodiment will be described in comparison with a weighing apparatus according to a reference example. In the weighing apparatus according to the reference example, when the weighing apparatus has been installed at the installation location, the zero point is acquired, for example, before the start of the inspection. After the acquisition of the zero point, the situations of the weighing apparatus and the surroundings thereof (for example, abnormality of the weighing unit, vibration of the weighing apparatus itself, and vibration that is transmitted from the outside to the weighing apparatus, and the like) change with time after the weighing apparatus is installed at the installation location, whereby there is a case where abnormality of the weighing unit such as a shift by a certain amount or more from the initially acquired zero point, or expansion of variation occurs. For example, in a case where the weighing apparatus is applied to the production line of the article, there is a case where such abnormality of the weighing unit affects the yield of the production of the article, or the like.

In contrast, according to the weighing apparatus 1B of the third embodiment, in a case where the article P is not located on the second conveyor unit 2b during the operation of the conveyance unit 2, the first accuracy information for evaluating the weighing accuracy, based on the weighing signal, is generated. The abnormality of the weighing unit 4 is detected based on the generated first accuracy information. Here, the first accuracy information in a case where the article P is not located on the second conveyor unit 2b during the operation of the conveyance unit 2 is used as a reference, and a temporal change in the situations of the weighing apparatus 1B and the surroundings thereof (for example, an increase in vibration of the floor) is regarded as a change in accuracy information with respect to the reference. In this way, the abnormality of the weighing unit 4 can be detected earlier than in a case where the detection is not performed based on the above reference. As a result, it becomes possible to eliminate the abnormality of the weighing unit 4 at an early stage and restart the weighing processing, and therefore, it becomes possible to prevent a decrease in productivity due to a temporal decrease in weighing accuracy.

In third embodiment, the control unit 8 further generates the second accuracy information for evaluating a temporal change in weighing accuracy, after the generation of the first accuracy information, and detects abnormality, based on the comparison result between the first accuracy information and the second accuracy information. In this way, the evaluation of the second accuracy information is performed with the first accuracy information as a reference, whereby it is possible to easily evaluate a temporal change in weighing accuracy even if the operator is not an expert.

In third embodiment, the control unit 8 stores a plurality of digital filters in advance, applies a digital filter different from the digital filter applied to the generation of the first accuracy information to generate the third accuracy information for evaluating the weighing accuracy at the different digital filter, in a case where abnormality has been detected, and performs the weighing processing by selecting either the different digital filter or a predetermined default digital filter, based on the comparison result between the first accuracy information and the third accuracy information. In this way, the digital filter is automatically switched based on the comparison result between the first accuracy information and the third accuracy information, so that, even in a case where abnormality in the weighing accuracy is detected when the digital filter applied to the generation of the first accuracy information is used, it becomes possible to restart the weighing processing by using the digital filter applied to the generation of the third accuracy information. As a result, it becomes possible to shorten an interruption time of the weighing processing.

In third embodiment, the weighing apparatus 1B further includes the notification lamp 9 and the speaker 10, as the notification unit that gives notice of the occurrence of abnormality in a case where the abnormality is detected. In this way, it is possible to cause the user of the weighing apparatus 1B to recognize the occurrence of the abnormality of the weighing unit 4. As a result, the user of the weighing apparatus 1B is urged to eliminate the abnormality of the weighing unit 4, and thus it becomes possible to early restart the weighing processing.

The weighing apparatus 1B further includes the storage unit 25 that stores processing information that includes at least the date and time when the first accuracy information was generated, the type of the digital filter applied to the generation of the first accuracy information, or the detection result information about the abnormality detection result, and the touch panel 7a of the display interface 7 that displays the processing information. In this way, the user of the weighing apparatus 1B can easily confirm the processing information.

Hereinafter, a modification example (a third modification example) of the third embodiment will be described. In the following third modification example, description of parts overlapping with those in the third embodiment will be omitted. Therefore, in the following, parts different from those in the third embodiment will be mainly described.

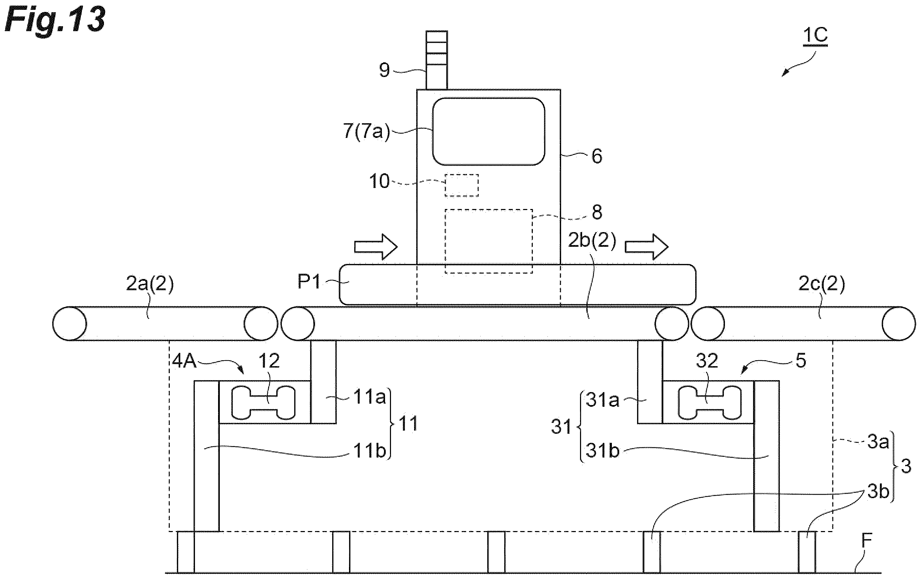

FIG. 13 is a schematic configuration diagram of a weighing apparatus according to the third modification example. As shown in FIG. 13, a weighing apparatus 1C has a configuration in which the weighing apparatus 1A (refer to FIG. 6) according to the first modification example and the weighing apparatus 1B (refer to FIG. 8) according to the third embodiment are combined, and has the same function as the first modification example. Therefore, in the weighing apparatus 1C, the standard deviation σₐ of the first accuracy information, the standard deviation σ_{b} of the second accuracy information, and the standard deviation σ_{c} of the third accuracy information are calculated based on the total weighing signal of the weighing signal that is obtained due to the first weighing unit 4A and the weighing signal that is obtained due to the second weighing unit 5. Then, in the same manner as in the third embodiment, the first accuracy information generation processing, the abnormality detection processing, and the digital filter switching processing are performed.

Alternatively, in the weighing apparatus 1C, the standard deviation σₐ of the first accuracy information, the standard deviation σ_{b} of the second accuracy information, and the standard deviation σ_{c} of the third accuracy information are calculated based on the weighing signal that is obtained by performing the filtering processing on the total original signal of the original signal that is output from the first weighing unit 4A and the original signal that is output from the second weighing unit 5. Then, in the same manner as in the third embodiment, the first accuracy information generation processing, the abnormality detection processing, and the digital filter switching processing are performed. Further, the calculation unit 23 of the control unit 8 generates a weighing value of the article P1, based on the weighing signal that is obtained by performing the filtering processing on the total original signal.

Also in the weighing apparatus 1C as described above, the same operation and effects as those in the third embodiment are exhibited. In addition, according to the weighing apparatus 1C, the weight of the article P1 that is long along the conveying direction can be accurately measured.

The embodiments of the weighing apparatus according to an aspect of the present disclosure and the modification examples thereof have been described above. However, an aspect of the present disclosure is not limited to the above embodiments and the above modification examples. The above embodiments and the above modification examples may be combined appropriately.

In each of the above embodiments and each of the above modification examples, the accuracy information is calculated based on the standard deviation itself of the amplitude of the waveform that is obtained by applying a digital filter to the original signal, or the standard deviation. However, there is no limitation thereto. For example, the accuracy information may be calculated based on the value of any point of the waveform that is obtained by applying a digital filter to the original signal. Further, for example, the accuracy information may be calculated based on a bias of the zero point (for example, the average value of the weighing signal) of the waveform that is included in the weighing signal that is obtained by applying a digital filter to the original signal, or may be calculated based on both the standard deviation and the bias. Further, for example, the accuracy information may be a standard deviation itself of a differential value of the amplitude of the waveform that is obtained by applying a digital filter to the original signal, and may be calculated based on the standard deviation. In these cases, the influence of vibration that occurs when the article is conveyed to the weighing apparatus can be reduced. Therefore, it becomes easier to automatically select a digital filter suitable for the situations of the weighing apparatus and the surroundings thereof. Alternatively, the accuracy information may be a standard deviation itself of a quadratic differential value of the amplitude of the waveform that is obtained by applying a digital filter to the original signal, or may be calculated based on the standard deviation. Alternatively, the accuracy information may be calculated by subtracting the minimum value of the amplitude of the waveform from the maximum value of the amplitude of the waveform. In this case, the accuracy information can be easily calculated.

In each of the above embodiments and each of the above modification examples, the weighing unit uses a digital original signal as the original signal and outputs it to the outside. However, there is no limitation thereto. The weighing unit may use the acquired analog original signal as the original signal and output it to the outside. In this case, for example, the control unit may digitally convert the analog original signal.

In each of the above embodiments and each of the above modification examples, the display interface of the weighing apparatus displays the weighing signal, the conveyance speed, the accuracy information, and the like. However, there is no limitation thereto. For example, a portable device or the like that has received the information output from the weighing apparatus may display the conveyance speed and the like. In this case, the conveyance speed or the like of the conveyance unit may be changed through the portable device or the like. Further, in each of the above embodiments and the above modification examples, input information is input through the display interface. However, there is no limitation thereto.

In the second embodiment and the second modification example, after a digital filter corresponding to the designated conveyance speed is selected, a digital filter corresponding to a speed obtained by multiplying the designated conveyance speed by a margin value is selected. However, there is no limitation thereto. For example, after the digital filter corresponding to a speed obtained by multiplying the designated conveyance speed by a margin value is selected, a digital filter in a case where the margin value is changed may be selected. In this case, the margin value includes 1, whereby a digital filter corresponding to a speed indicating "0%" can be selected.

In the second embodiment and the second modification example, a digital filter corresponding to each of a plurality of conveyance speeds is selected before the weighing of the article. However, there is no limitation thereto. For example, only a digital filter corresponding to one conveyance speed may be selected before the weighing of the article. In this case, for example, when the conveyance speed of the conveyance unit is changed after the weighing of the article, steps S2 to S5 may be executed with respect to a conveyance speed different from the above one conveyance speed. That is, the selection of the digital filters corresponding to some conveyance speeds among the plurality of conveyance speeds, and the selection of the digital filters corresponding to some other conveyance speeds may be performed at different timings.

In the second and third embodiments and the second and third modification examples, in a case where a standard deviation exceeds a predetermined threshold value, the display interface displays a warning screen under the control of the control unit. However, there is no limitation thereto. For example, in a case where a standard deviation exceeds a predetermined threshold value, the control unit may not accept the setting and change to the designated conveyance speed. That is, the control unit may prohibit the setting and change to some conveyance speeds among the plurality of conveyance speeds. In this case, it is possible to easily prevent the article P from being weighed at a conveyance speed having a low weighing accuracy.

In the third embodiment and the third modification example, the second accuracy information is generated with respect to the weighing signal obtained by applying the same digital filter as the digital filter applied to the generation of the first accuracy information to the original signal, and abnormality is detected based on the comparison result between the first accuracy information and the second accuracy information. However, there is no limitation thereto. For example, when generating the second accuracy information, a digital filter different from the digital filter applied to the generation of the first accuracy information may be applied to the original signal, or the digital filter may not be applied to the original signal.

In the third embodiment and the third modification example, the third accuracy information is generated with respect to the weighing signal obtained by applying a digital filter different from the digital filter applied to the generation of the first accuracy information to the original signal, and the digital filter switching processing is performed based on the comparison result between the first accuracy information and the third accuracy information. However, there is no limitation thereto. For example, it is not always necessary to generate the third accuracy information. In this case, switching to the default digital filter may be automatically performed. Alternatively, the digital filter switching processing itself may be omitted. In this case, step S26 in FIG. 10 and the processing of FIG. 11 may be omitted.

In the third embodiment and the third modification example, the weighing apparatus includes the touch panel, the notification lamp, and the speaker as the notification unit. However, some of these may be omitted. Further, all of these may be omitted. In this case, step S27 in FIG. 10 may be omitted. Further, in the first and second embodiments and the first and second modification examples, the weighing apparatus may include the touch panel, the notification lamp, and the speaker as the notification unit.

## Claims

1. A weighing apparatus comprising:
a conveyance unit (2) configured to conveying an article;
a weighing unit (4) configured to weigh the article on the conveyance unit; and
a processing unit (8) including a plurality of digital filters set in advance and configured to process an original signal output from the weighing unit,
**characterized in that**
the processing unit (8) is configured to select one digital filter among the plurality of digital filters, based on a result of applying each of the plurality of digital filters (22) to the original signal when the conveyance unit (2) is in operation and the article is not conveyed by the conveyance unit (2).

2. The weighing apparatus according to claim 1,
wherein the processing unit (8) is configured to compare standard deviations of amplitudes for each waveform that is obtained by applying each of the plurality of digital filters to the original signal, and to select a digital filter in which a smallest standard deviation is obtained.

3. The weighing apparatus according to claim 1,
wherein the processing unit (8) is configured to compare standard deviations of differential values of amplitudes for each waveform that is obtained by applying each of the plurality of digital filters to the original signal, and to select a digital filter in which a smallest standard deviation is obtained.

4. The weighing apparatus according to any one of claims 1 to 3, wherein
the weighing unit (4) includes:
a first weighing unit (4A) disposed on an upstream side of the conveyance unit (2) and configured to output a first original signal; and
a second weighing unit (5) disposed on a downstream side of the conveyance unit (2) and configured to output a second original signal, and
the processing unit (8) is configured to select one digital filter among the plurality of digital filters with respect to each of the first original signal and the second original signal.

5. The weighing apparatus according to any one of claims 1 to 4,
wherein the processing unit (8) includes a storage unit (25) configured to store a date and time at which the one digital filter among the plurality of digital filters (22) was selected, the one digital filter, and the original signal.

6. The weighing apparatus according to any one of claims 1 to 5,
Wherein, when the conveyance unit (2) is in operation and the article is not conveyed by the conveyance unit (2), the processing unit (8) is configured to operate the conveyance unit (2) at a plurality of conveyance speeds, and to select and store corresponding one digital filter among the plurality of digital filters (22) with respect to each of the plurality of conveyance speeds.

7. The weighing apparatus according to claim 6, further comprising
a display unit (7) configured to display the plurality of conveyance speeds and accuracy information for each of the plurality of conveyance speeds in association with each other.

8. The weighing apparatus according to claim 7,
wherein the processing unit (8) is configured to calculate the accuracy information, based on a standard deviation of an amplitude of a waveform obtained by performing filtering processing on the original signal.

9. The weighing apparatus according to claim 7,
wherein the processing unit (8) is configured to calculate the accuracy information, based on a standard deviation of a differential value of an amplitude of a waveform obtained by performing filtering processing on the original signal.

10. The weighing apparatus according to claim 8 or 9, wherein
the display unit (7) is configured to display a warning screen in a case where the standard deviation corresponding to a designated conveyance speed exceeds a predetermined threshold value.

11. The weighing apparatus according to any one of claims 7 to 10,
wherein the display unit (7) is configured to display a weighing pitch of the article calculated based on the conveyance speed, dimensions of the article along a conveying direction by the conveyance unit, and a conveyance frequency of the article.

12. The weighing apparatus according to claim 6,
wherein, when the conveyance unit (2) is in operation and the article is not conveyed by the conveyance unit (2), the processing unit (8) is configured to operate the conveyance unit (2) at a plurality of conveyance speeds, and to obtain accuracy information corresponding to each of the plurality of conveyance speeds.

13. The weighing apparatus according to any one of claims 1 to 6, wherein
the original signal corresponds to a weighing component of a force that is applied to the conveyance unit (2),
the processing unit (8) is configured to generate a weighing signal by applying a digital filter to the original signal, and to perform weighing processing, based on the weighing signal, and
the processing unit (8) is configured to generate first accuracy information for evaluating weighing accuracy, based on the weighing signal, in a case where the article is not located on the conveyance unit (2) during the operation of the conveyance unit (2), and to detect abnormality of the weighing unit (4), based on the generated first accuracy information.

14. The weighing apparatus according to claim 13,
wherein the processing unit (8) is configured to generate second accuracy information for evaluating a temporal change in the weighing accuracy after the generation of the first accuracy information, and to detect the abnormality, based on a comparison result between the first accuracy information and the second accuracy information.

15. The weighing apparatus according to claim 13 or 14,
wherein the processing unit (8) is configured to:
store a plurality of digital filters in advance;
apply a digital filter different from the digital filter applied to the generation of the first accuracy information to generate third accuracy information for evaluating the weighing accuracy at the different digital filter, in a case where the abnormality is detected, and
select either the different digital filter or a predetermined default digital filter, based on a comparison result between the first accuracy information and the third accuracy information, and to perform the weighing processing.

## Patentansprüche

1. Wägevorrichtung, die aufweist:
eine Fördereinheit (2), die zum Fördern eines Artikels konfiguriert ist;
eine Wägeeinheit (4), die konfiguriert ist, den Artikel auf der Fördereinheit zu wiegen; und
eine Verarbeitungseinheit (8), die mehrere digitale Filter aufweist, die im Voraus eingestellt und konfiguriert sind, ein von der Wägeeinheit abgegebenes ursprüngliches Signal zu verarbeiten,
**dadurch gekennzeichnet, dass**
die Verarbeitungseinheit (8) konfiguriert ist, einen digitalen Filter aus den mehreren digitalen Filtern auszuwählen, basierend auf einem Ergebnis der Anwendung von jedem der mehreren digitalen Filter (22) auf das ursprüngliche Signal, wenn die Fördereinheit (2) in Betrieb ist und der Artikel nicht durch die Fördereinheit (2) befördert wird.

2. Wägevorrichtung nach Anspruch 1,
wobei die Verarbeitungseinheit (8) konfiguriert ist, Standardabweichungen der Amplituden für jede Wellenform zu vergleichen, die durch Anwendung von jedem der mehreren digitalen Filter auf das ursprüngliche Signal erhalten wird, und einen digitalen Filter auszuwählen, bei dem eine kleinste Standardabweichung erhalten wird.

3. Wägevorrichtung nach Anspruch 1,
wobei die Verarbeitungseinheit (8) konfiguriert ist, Standardabweichungen von Differenzwerten von Amplituden für jede Wellenform zu vergleichen, die durch Anwenden von jedem der mehreren digitalen Filter auf das ursprüngliche Signal erhalten wird, und einen digitalen Filter auszuwählen, bei dem eine kleinste Standardabweichung erhalten wird.

4. Wägevorrichtung nach einem der Ansprüche 1 bis 3, wobei die Wägeeinheit (4) aufweist:
eine erste Wägeeinheit (4A), die auf einer stromaufwärts gelegenen Seite der Fördereinheit (2) angeordnet und
konfiguriert ist, ein erstes ursprüngliches Signal abzugeben; und
eine zweite Wägeeinheit (5), die auf einer stromabwärts gelegenen Seite der Fördereinheit (2) angeordnet und konfiguriert ist, ein zweites ursprüngliches Signal abzugeben, und
die Verarbeitungseinheit (8) konfiguriert ist, einen digitalen Filter aus den mehreren digitalen Filtern bezüglich jeweils dem ersten ursprünglichen Signal und dem zweiten ursprünglichen Signal auszuwählen.

5. Wägevorrichtung nach einem der Ansprüche 1 bis 4, wobei die Verarbeitungseinheit (8) eine Speichereinheit (25) aufweist, die konfiguriert ist, ein Datum und eine Uhrzeit, zu der der eine digitale Filter aus den mehreren digitalen Filtern (22) ausgewählt wurde, der eine digitale Filter und das ursprüngliche Signal zu speichern.

6. Wägevorrichtung nach einem der Ansprüche 1 bis 5, wobei, wenn die Fördereinheit (2) in Betrieb ist und der Artikel nicht durch die Fördereinheit (2) befördert wird, die Verarbeitungseinheit (8) konfiguriert ist, die Fördereinheit (2) mit mehreren Fördergeschwindigkeiten zu betreiben und einen entsprechenden digitalen Filter aus den mehreren digitalen Filtern (22) bezüglich jeder der mehreren Fördergeschwindigkeiten auszuwählen und zu speichern.

7. Wägevorrichtung nach Anspruch 6, die ferner aufweist:
eine Anzeigeeinheit (7), die konfiguriert ist, die mehreren Fördergeschwindigkeiten und Genauigkeitsinformationen für jede der mehreren Fördergeschwindigkeiten in Verbindung miteinander anzuzeigen.

8. Wägevorrichtung nach Anspruch 7,
wobei die Verarbeitungseinheit (8) konfiguriert ist, die Genauigkeitsinformationen basierend auf einer Standardabweichung einer Amplitude einer Wellenform zu berechnen, die durch Ausführen einer Filterverarbeitung am ursprünglichen Signal erhalten wird.

9. Wägevorrichtung nach Anspruch 7,
wobei die Verarbeitungseinheit (8) konfiguriert ist, die Genauigkeitsinformationen basierend auf einer Standardabweichung eines Differenzwertes einer Amplitude einer Wellenform zu berechnen, die durch Durchführen einer Filterverarbeitung am ursprünglichen Signal erhalten wird.

10. Wägevorrichtung nach Anspruch 8 oder 9, wobei
die Anzeigeeinheit (7) konfiguriert ist, einen Warnbildschirm anzuzeigen, wenn die Standardabweichung, die einer bestimmten Beförderungsgeschwindigkeit entspricht, einen vorbestimmten Schwellenwert überschreitet.

11. Wägevorrichtung nach einem der Ansprüche 7 bis 10, wobei die Anzeigeeinheit (7) konfiguriert ist, einen Wiegeabstand des Artikels anzuzeigen, der basierend auf der Fördergeschwindigkeit, den Abmessungen des Artikels entlang einer Förderrichtung durch die Fördereinheit und einer Förderfrequenz des Artikels berechnet wird.

12. Wägevorrichtung nach Anspruch 6,
wobei, wenn die Fördereinheit (2) in Betrieb ist und der Artikel nicht durch die Fördereinheit (2) gefördert wird, die Verarbeitungseinheit (8) konfiguriert ist, die Fördereinheit (2) mit mehreren Fördergeschwindigkeiten zu betreiben und Genauigkeitsinformationen zu erhalten, die jeder der mehreren Fördergeschwindigkeiten entsprechen.

13. Wägevorrichtung nach einem der Ansprüche 1 bis 6, wobei das ursprüngliche Signal einer Wiegekomponente einer Kraft entspricht, die auf die Fördereinheit (2) ausgeübt wird, die Verarbeitungseinheit (8) konfiguriert ist, ein Wägesignal zu erzeugen, indem sie einen digitalen Filter auf das ursprüngliche Signal anwendet, und basierend auf dem Wägesignal eine Wägeverarbeitung durchzuführen, und die Verarbeitungseinheit (8) konfiguriert ist, basierend auf dem Wägesignal erste Genauigkeitsinformationen zum Bewerten der Wägegenauigkeit in einem Fall zu erzeugen, in dem sich der Artikel während des Betriebs der Fördereinheit (2) nicht auf der Fördereinheit (2) befindet, und basierend auf den erzeugten ersten Genauigkeitsinformationen eine Anomalie der Wägeeinheit (4) zu erkennen.

14. Wägevorrichtung nach Anspruch 13,
wobei die Verarbeitungseinheit (8) konfiguriert ist, zweite Genauigkeitsinformationen zum Bewerten einer zeitlichen Änderung der Wägegenauigkeit nach der Erzeugung der ersten Genauigkeitsinformationen zu erzeugen und die Anomalie basierend auf einem Vergleichsergebnis zwischen den ersten Genauigkeitsinformationen und den zweiten Genauigkeitsinformationen zu erkennen.

15. Wägevorrichtung nach Anspruch 13 oder 14,
wobei die Verarbeitungseinheit (8) konfiguriert ist:
mehrere digitale Filter im Voraus zu speichern;
einen digitalen Filter anzuwenden, der sich von dem digitalen Filter unterscheidet, der zur Erzeugung der ersten Genauigkeitsinformationen angewendet wird, um dritte Genauigkeitsinformationen zum Bewerten der Wägegenauigkeit bei dem anderen digitalen Filter zu erzeugen, in einem Fall, in dem die Anomalie erkannt wird, und
entweder den anderen digitalen Filter oder einen vorbestimmten Standard-Digitalfilter basierend auf einem Vergleichsergebnis zwischen den ersten Genauigkeitsinformationen und den dritten Genauigkeitsinformationen auszuwählen, und die Wägeverarbeitung durchzuführen.

## Revendications

1. Dispositif de pesage, comprenant :
une unité de transport (2) prévue pour transporter un article ;
une unité de pesage (4) prévue pour peser l'article sur l'unité de transport ; et
une unité de traitement (8) comprenant une pluralité de filtres numériques préalablement réglés et prévus pour traiter un signal original émis par l'unité de pesage,
**caractérisé en ce que**
l'unité de traitement (8) est prévue pour sélectionner un filtre numérique parmi la pluralité de filtres numériques, sur la base d'un résultat d'application de chaque filtre de la pluralité de filtres numériques (22) au signal original lorsque l'unité de transport (2) est en fonctionnement et
que l'article n'est pas transporté par l'unité de transport (2) .

2. Dispositif de pesage selon la revendication 1,
où l'unité de traitement (8) est prévue pour comparer des déviations d'amplitudes standard pour chaque forme d'onde obtenue par application de chaque filtre de la pluralité de filtres numériques au signal original, et pour sélectionner un filtre numérique où est obtenue une déviation standard minimale.

3. Dispositif de pesage selon la revendication 1,
où l'unité de traitement (8) est prévue pour comparer des déviations standard de valeurs d'amplitudes différentielles pour chaque forme d'onde obtenue par application de chaque filtre de la pluralité de filtres numériques au signal original, et pour sélectionner un filtre numérique où est obtenue une déviation standard minimale.

4. Dispositif de pesage selon l'une des revendications 1 à 3, où
l'unité de pesage (4) comprend :
une première unité de pesage (4A) disposée en amont de l'unité de transport (2) et prévue pour émettre un premier signal original ; et une deuxième unité de pesage (5) disposée en aval de l'unité de transport (2) et prévue pour émettre un deuxième signal original, et où
l'unité de traitement (8) est prévue pour sélectionner un filtre numérique parmi la pluralité de filtres numériques relativement au premier signal original et au deuxième signal original.

5. Dispositif de pesage selon l'une des revendications 1 à 4, où l'unité de traitement (8) comprend une unité de mémorisation (25) prévue pour mémoriser la date et l'heure auxquelles le premier filtre numérique parmi la pluralité de filtres numériques (22) a été sélectionné, le premier filtre numérique et le signal original.

6. Dispositif de pesage selon l'une des revendications 1 à 5, où, lorsque l'unité de transport (2) est en fonctionnement et que l'article n'est pas transporté par l'unité de transport (2), l'unité de traitement (8) est prévue pour actionner l'unité de transport (2) à une pluralité de vitesses de transport, et pour sélectionner et mémoriser un premier filtre numérique correspondant parmi la pluralité de filtres numériques (22) relativement à chaque vitesse de la pluralité de vitesses de transport.

7. Dispositif de pesage selon la revendication 6, comprenant en outre
une unité d'affichage (7) prévue pour afficher la pluralité de vitesses de transport et une information de précision pour chaque vitesse de la pluralité de vitesses de transport associées les unes aux autres.

8. Dispositif de pesage selon la revendication 7,
où l'unité de traitement (8) est prévue pour calculer l'information de précision sur la base d'une déviation standard d'une amplitude d'une forme d'onde obtenue en exécutant un processus de filtrage sur le signal original.

9. Dispositif de pesage selon la revendication 7,
où l'unité de traitement (8) est prévue pour calculer l'information de précision sur la base d'une déviation standard d'une valeur différentielle d'une amplitude d'une forme d'onde obtenue en exécutant un processus de filtrage sur le signal original.

10. Dispositif de pesage selon la revendication 8 ou la revendication 9, où
l'unité d'affichage (7) est prévue pour afficher un écran d'avertissement dans le cas où la déviation standard correspondant à une vitesse de transport indiquée dépasse une valeur seuil définie.

11. Dispositif de pesage selon l'une des revendications 7 à 10, où l'unité d'affichage (7) est prévue pour afficher un pas de pesage de l'article calculé sur la base de la vitesse de transport, les dimensions de l'article dans une direction de transport par l'unité de transport et une fréquence de transport de l'article.

12. Dispositif de pesage selon la revendication 6,
où, lorsque l'unité de transport (2) est en fonctionnement et que l'article n'est pas transporté par l'unité de transport (2), l'unité de traitement (8) est prévue pour actionner l'unité de transport (2) à une pluralité de vitesses de transport, et pour obtenir une information de précision correspondant à chaque vitesse de la pluralité de vitesses de transport.

13. Dispositif de pesage selon l'une des revendications 1 à 6, où
le signal original correspond une composante de pesage d'une force appliquée à l'unité de transport (2),
l'unité de traitement (8) est prévue pour générer un signal de pesage par application d'un filtre numérique au signal original, et pour exécuter un processus de pesage sur la base du signal de pesage, et
l'unité de traitement (8) est prévue pour générer une première information de précision pour l'évaluation d'une précision de pesage sur la base du signal de pesage, dans le cas où l'article n'est pas disposé sur l'unité de transport (2) pendant le fonctionnement de l'unité de transport (2), et pour détecter une anomalie de l'unité de pesage (4) sur la base de la première information de précision générée.

14. Dispositif de pesage selon la revendication 13,
où l'unité de traitement (8) est prévue pour générer une deuxième information de précision pour l'évaluation d'une variation temporelle dans la précision de pesage après génération de la première information de précision, et pour détecter l'anomalie sur la base d'un résultat de comparaison entre la première information de précision et la deuxième information de précision.

15. Dispositif de pesage selon la revendication 13 ou la revendication 14,
où l'unité de traitement (8) est prévue pour :
mémoriser préalablement une pluralité de filtres numériques ;
appliquer un filtre numérique différent du filtre numérique appliqué à la génération de la première information de précision pour générer une troisième information de précision pour l'évaluation de la précision de pesage sur le filtre numérique différent, dans le cas où l'anomalie est détectée, et
sélectionner le filtre numérique différent ou un filtre numérique par défaut défini, sur la base d'un résultat de comparaison entre la première information de précision et
la troisième information de précision, et exécuter le processus de pesage.
